# EUROPÄISCHE PATENTSCHRIFT

(11) **EP 2 937 665 B1**
(45) Veröffentlichungstag und Bekanntmachung des Hinweises auf die Patenterteilung: **16.06.2021**
(21) Anmeldenummer: 14165580.3
(22) Anmeldetag: 23.04.2014
(51) Int. Cl.: G01C 15/00, G02F 1/13, G01S 7/481, G01S 7/486, G01S 17/42, G02F 1/1339, G02F 1/1333, G01S 7/499

(54) **Distanzmessmodul mit einer variablen optischen Abschwächeinheit aus einer LC-Zelle**
Distance measuring module with a variable optical attenuation unit from an LC cell
Module de mesure de distance doté d'une unité d'atténuation optique variable à partir d'une cellule LC

(43) Veröffentlichungstag der Anmeldung: 28.10.2015
(73) Patentinhaber: Hexagon Technology Center GmbH, 9435 Heerbrugg (CH)
(72) Erfinder: Hinderling, Jürg, CH-9437 Marbach (CH); Benz, Paul, CH-9444 Diepoldsau (CH); Lais, Josef, CH-9437 Marbach (CH)
(74) Vertreter: Kaminski Harmann

(56) Entgegenhaltungen:
- WO-A1-2012/130302
- DE-A1- 10 215 109
- DE-U1- 20 022 604
- US-A1- 2007 202 273
- US-B1- 6 377 327
- YUTAKA ISHII: "The World of Liquid-Crystal Display TVs-Past, Present, and Future", JOURNAL OF DISPLAY TECHNOLOGY, IEEE SERVICE CENTER, NEW YORK, NY, US, Bd. 3, Nr. 4, Dezember 2007 (2007-12), Seiten 351-360, XP011196552, ISSN: 1551-319X, DOI: 10.1109/JDT.2007.909381
- NABEEL A RIZA: "HIGH-OPTICAL-ISOLATION LOW-LOSS MODERATE-SWITCHING-SPEED NEMATIC LIQUID-CRYSTAL OPTICAL SWITCH", OPTICS LETTERS, OPTICAL SOCIETY OF AMERICA, Bd. 19, Nr. 21, 1. November 1994 (1994-11-01), Seiten 1780-1782, XP000475861, ISSN: 0146-9592
- YUNG-HSUN WU ET AL: "Variable optical attenuator with a polymer-stabilized dual-frequency liquid crystal", APPLIED OPTICS, Bd. 44, Nr. 20, 1. Januar 2005 (2005-01-01), Seite 4394, XP055167354, ISSN: 0003-6935, DOI: 10.1364/AO.44.004394
- BOUGRENET DE LA TOCNAYE DE J L: "ENGINEERING LIQUID CRYSTALS FOR OPTIMAL USES IN OPTICAL COMMUNICATION SYSTEMS", LIQUID CRYSTALS: AN INTERNATIONAL JOURNAL OF SCIENCE AND TECHNOLOGY, TAYLOR & FRANCIS, GB, Bd. 31, Nr. 2, 1. Februar 2004 (2004-02-01), Seiten 241-269, XP001047710, ISSN: 0267-8292, DOI: 10.1080/02678290410001648570
- "MEADOWLARK OPTICS CATALOG 2003", INTERNET CITATION, 2003, Seiten 1-57, XP002546744, Gefunden im Internet: URL:http://hallaweb.jlab.org/tech/Detector s/public_html/manuals/data_sheets-manuals/ M-N/meadowlark_optics/Meadowlark_Catalog.p df [gefunden am 2009-09-21]

## Beschreibung

Die Erfindung betrifft ein Vermessungsgerät, insbesondere Tachymeter, Laserscanner, Profiler oder Lasertracker, mit einem elektronischen Laserdistanzmessmodul, das einen optischen Sendekanal und einen optischen Empfangskanal für Lasermessstrahlung umfasst, wobei im optischen Sendekanal und/oder optischen Empfangskanal eine variable optische Abschwächeinheit für die Lasermessstrahlung vorgesehen ist.

Gattungsgemäße optische Abschwächeinheiten oder Abschwächer werden insbesondere in elektronischen Distanzmessmodulen (EDM) eingesetzt. Die Distanzmessmodule sind Baugruppen beispielsweise von Theodoliten, von Profilern oder von Laserscannern.

Bekannte Abschwächer aus dem Stand der Technik bestehen im Wesentlichen aus einem Graufilterrad, welches motorisch angetrieben wird. In der Regel werden zehn bis fünfzig Abschwächstufen diskret angefahren; die Abschwächung kann typischerweise aber auch kontinuierlich eingestellt werden.

In der Regel befindet sich ein solcher Abschwächer im optischen Sendekanal eines EDM, kann aber auch im Empfangskanal des EDM verwendet werden. Eine der besonderen Anforderungen für den Einsatz eines Abschwächers in einem EDM ist ein sehr großer Einstellbereich von sehr niedriger bis extrem hoher optischer Dichte von mindestens 5.0 (=10⁵), verbunden typischerweise mit einem exponentiellen Verlauf der Transmission zwischen diesen beiden Extremzuständen. Der exponentielle Verlauf bedeutet, dass bei einem Winkelschritt die Abschwächung um einen multiplikativen und nicht additiven Faktor ab- oder zunimmt.

Der hohe benötigte Signaldynamikbereich eines EDM ist einerseits bedingt durch den abzudeckenden großen zu bestimmenden Distanzbereich von weniger als 1m bis über mehrere Kilometer, anderseits dadurch, dass stark diffus lichtstreuende Zielobjekte mit ausgesprochen wenig Rückstreuung als auch prismatische Zielobjekte mit Retroreflexion und höchster optischer Qualität, und entsprechend hoch intensiver Rückstrahlung, angemessen werden sollen. Der Signalbereich geht dabei über 5 Größenordnungen (10⁵), worauf die vorgenannten Anforderungen der großen Variabilität der Transmission begründet sind.

Gegenwärtig weit verbreitete Abschwächer werden vielfach aus einem photographischen Schwarz/Weiss-Film hoher Dichte hergestellt. Dazu eignen sich sowohl Filme mit panchromatischen als auch orthochromatischen Emulsionen. Solche Filme weisen einen Polyesterträger auf, so dass sie leicht, von kleiner Dimension, einfach herstellbar und daher kostengünstig sind.

Verbunden mit dem rasanten Fortschritt der Digitalphotographie wurde inzwischen das klassische Filmgeschäft weitgehend verdrängt. Die großen Hersteller sowohl der photographischen Emulsionen aber auch der optisch qualitativ einwandfreien Trägermaterialien stellen nach und nach die Produktion und den Verkauf derartiger Filme ein. Insbesondere ist von dieser aktuellen Entwicklung die Herstellung von monochromen Emulsionen mit hoher optischer Schwärzungsdichte betroffen.

Zwar sind derzeit noch Filme von hohem Qualitätsniveau erhältlich, aber nur mit einer mittleren optischen Dichte unter 3. Mit den verbleibenden kommerziell erhältlichen Filmen lassen sich die geforderten Graustufenumfänge, welche mit den Orthofilmen erreicht wurden, nicht mehr realisieren. Die aktuellen Farb- oder s/w-Filme erreichen nur noch Werte bis etwa OD 2.5. Auch mit hart arbeitenden Entwicklerlösungen ist keine volle Grauwertwiedergabe, d.h. so starke Abschwächung wie vorangehend gefordert, erzielbar.

Eine mögliche Realisierungsform den Signalbereich über 5 Größenordnungen (10⁵) einzustellen, würde mit einem Doppelpaket von Filmen mit OD 2.5 realisierbar sein. Dieses hätte aber den Nachteil von erhöhtem Streulicht, welches bekannterweise zu verhindern ist. Ein weiterer Nachteil wären die wegen erhöhtem Trägheitsmoment längeren Schaltzeiten.

Einige Varianten von Abschwächfiltern haben eine linienoder rasterartige Gitterstruktur, wobei durch eine zunehmende Dichte der Linien oder durch Verringerung der Größe der freien Öffnungen der Raster eine monotone Zunahme der Abschwächung erzielt wird. Zudem wird die Abschwächung durch optische Beugung verstärkt. Eine Linien- oder Gitterstruktur kann die optische Abschwächung durch Beugung zusätzlich verstärken, und es können Abschwächverhältnisse erreicht werden, die höher sind als die Schwärzungskurve eines Films. - Abschwächer mit gitterartiger Struktur sind in einem Sendekanal mit einer Lichtquelle wie einem Laser, die beugungsbegrenztes Licht aussendet, jedoch nicht geeignet, da die Beugungsordnungen diskrete Strahlrichtungen erzeugen, welche die Sensorfunktion eines EDM stören.

Hinsichtlich elektro-optischen Abschwächern oder spatialen Modulatoren wurden in den letzten ca. zwanzig Jahren diverse Techniken ausprobiert. Neben Vorrichtungen basierend auf Flüssigkristallen wurden beispielsweise magneto-optische, halbleiterbasierte Multiquantum Well Anordnungen oder deformierbare Spiegel zur Verwendung als Abschwächer vorgeschlagen. Einen Einsatz in kommerziellen Produkten haben bisher nur Anordnungen basierend auf der Flüssigkristalltechnologie (Hersteller: Boulder Nonlinear Systems) und die MEMS-basierte Mikrospiegeltechnologie (Hersteller: Texas Instruments) gefunden; eine derartige Anordnung für einen Abschwächer wird auch in der US 2012/0224164 A1 offenbart.

Vorstellbar sind auch nicht-optische Signalabschwächungen, beispielsweise Signalabschwächung im elektrischen Teil des Signalpfads. Dabei kommen die Ansteuerung der Licht emittierenden Laserdiode, zur Variation der erzeugten Ausgangslichtintensität, Steuerung des APD-Gains der Empfangsdiode sowie die Ansteuerung der elektrischen Verstärkerstufen bis zum Analog-Digital-Wandler und auch elektro-optische Faserabschwächer in Frage.

Diese Abschwächungsmöglichkeiten werden auch seit jeher eingesetzt, allerdings im Allgemeinen nur in ergänzender und nicht alleiniger Funktion zur Signalabschwächung; denn der Signaldynamikumfang, welcher mit einem Distanzmessmodul zu bewältigen ist, übersteigt die Möglichkeiten dieser elektrischen Abschwächungsmethoden, auch wenn diese kombiniert sind. Beispielsweise ist das Signal von reflektierenden Gegenständen mindestens millionenfach stärker als das von einer dunklen diffusen Objektoberfläche. Elektrische Empfangsschaltungen der oben genannten Art erreichen Dynamiken im Bereich von etwa drei Größenordnungen.

Optische Abschwächer sind hinsichtlich signalübertragungstechnischem Verhalten linear, d.h. sie sind linear sowohl in Phase (Laufzeit) als auch in Amplitude, und die transmittierten Signale sind unverzerrt, was vorteilhaft für eine hohe Messgenauigkeit eines EDM-Moduls ist.

Bekannt sind auch faseroptische Abschwächungsvorrichtungen. Diese arbeiten zwar schnell und können bereits mit einer Schaltzeit von einigen wenigen Nanosekunden eine gewünschte Signalstärke einstellen, sind aber von den mechanischen Dimensionen her ungünstig groß und relativ teuer.

Keines der bisherigen Produkte basiered auf den bis jetzt vorgeschlagenen Alternativlösungen erfüllt jedoch die Anforderungen an den hohen Dynamikbereich von OD0 bis OD5 oder sogar OD6.

Eine Aufgabe der vorliegenden Erfindung ist die Bereitstellung eines Abschwächers, der, mit einem dynamischen Einstellbereich der optischen Dichte über fünf Größenordnungen, eine optische Dichte von mindestens OD5 erreichen kann. Eine weitere Aufgabe ist die Ermöglichung einer Einstellung des Signals eines EDM möglichst mit einer einzigen Abschwächungseinheit, wodurch Bauvolumen und Kosten verringert werden können.

Zur Lösung dieser Aufgaben erscheint der Einsatz der Flüssigkristalltechnologie interessant.

Seit inzwischen schon geraumer Zeit finden Flüssigkristallanzeigen bzw. Flüssigkristallbildschirme (LCDs) Anwendung beispielsweise in der Messtechnik oder auch der Unterhaltungselektronik. Ihre Funktion beruht darauf, dass Flüssigkristalle die Polarisation des Lichts beeinflussen, wenn ein bestimmtes Ausmaß an elektrischer Spannung an sie angelegt wird.

Zum Beispiel DE 200 22 604 U1 betrifft eine optoelektronischen Vorrichtung mit einem Dämpfungselement, dass als LCD-Shutter ausgebildet ist.

LCDs bestehen aus Segmenten, die unabhängig voneinander ihre Transparenz ändern können. Dazu wird mit elektrischer Spannung in jedem Segment einzeln die Ausrichtung der Flüssigkristalle gesteuert. Damit ändert sich die Durchlässigkeit für polarisiertes Licht, das mit einer Hintergrundbeleuchtung und Polarisationsfiltern erzeugt wird.

Um für eine erfindungsgemäße Flüssigkristal-Shutter geeignet zu sein, müssen LCDs LC-Glaszellen homogene optische Eigenschaften über die gesamte freie Öffnung aufweisen. Sie müssen dauerhaft eine hohe Dichtheit haben und resistent gegen Alterungserscheinungen sein. Ebenso dürfen die Kontakte an die LCD anzuschließender Elektroden keine Einschränkungen der Funktionalität durch Alterung oder Korrosion aufweisen. Vorteilhaft sind die Kontakte mit Flexprint ausgestattet.

Die am häufigsten eingesetzten Flüssigkristalle im Bereich der Anzeige- und Bildtechnik sind nematische Kristalle. Eine Verbindung, die eine flüssigkristalline Phase zeigt, nennt man Mesogen. Die nematische Phase achiraler Mesogene ist der einfachste Typ flüssigkristalliner Phasen. In ihr weisen die Moleküle eine Orientierungsordnung bezüglich eines sogenannten "Direktors", dem Einheitsvektor der Richtung, auf. Die daraus folgende Vorzugsorientierung ist in der Regel nur für kleine Volumina konstant. Die Molekülschwerpunkte sind analog zu Flüssigkeiten statistisch verteilt: Es tritt keinerlei Positionsfernordnung auf.

Diverse Strukturen, sogenannte Flüssigkristallzellen, wirken als Polarisationsdreher. Am bekanntesten sind die twisted nematic LCD (TN), diese Zellen haben einen besonders einfachen Aufbau und drehen die Polarisation um lediglich 90°.

In Flüssigkristalldisplays verwendete Flüssigkristalle sind organische Verbindungen, die Eigenschaften von sowohl Flüssigkeiten als auch von Festkörpern aufweisen. Sie sind einerseits mehr oder weniger fluide als eine Flüssigkeit, andererseits zeigen sie Eigenschaften wie Doppelbrechung, die vorwiegend von Festkörpern bekannt sind. Ein einfaches Flüssigkristall-Anzeigeelement lässt sich mit der Schadt-Helfrich-Zelle, auch bezeichnet als nematische Drehzelle, realisieren.

Durch eine ganz besondere LC-Struktur lassen sich optische Abschwächfaktoren gegenüber dem Zustand mit maximaler Transmission von mehr als 10⁵ erreichen.

Bei TN-LCD wird einfallendes Licht vor dem Eintritt in das Element linear polarisiert. Durch die Verdrillung der Moleküle in der TN-LCD erfolgt eine Drehung der Polarisationsrichtung des Lichtes, wodurch das Licht den zweiten, um 90° gedrehten, Polarisator passieren kann und die Zelle transparent ist.

Bei Anliegen einer elektrischen Spannung an den Elektroden richten sich die Flüssigkristallmoleküle vorwiegend parallel (in axialer Richtung) zum elektrischen Feld aus und die Verdrillung wird dadurch zunehmend aufgehoben. Die Polarisationsrichtung des Lichts wird nicht mehr gedreht und damit kann es den zweiten Polarisationsfilter nicht mehr passieren.

TN-LC-Zellen zeichnen sich durch ihre sehr hohe Transmission im Offenzustand aus, was bis heute mit anderen LCD-Technologien nicht oder kaum erreichbar ist. - Die TN-Zelle ist also ein spannungsgesteuertes Lichtventil. Ein Bildschirm kann aus beliebig vielen solcher Zellen (Bildelemente, Pixel) bestehen.

Weiterentwicklungen von TN-Zellen sind STN-Zellen ("Super-Twisted Nematic"), DSTN-Zellen ("Double Super-Twisted Nematic") und TSTN-Zellen ("Triple Super-Twisted Nematic").

Bei STN-LCD wird der Verdrillwinkel der Moleküle auf 180° bis 270° erhöht. Dadurch verändert sich die elektro-optische Kennlinie (Abschwächung gegen Steuerspannung), sie wird erheblich steiler. Im Hinblick auf den Bau eines Graustufenabschwächers sollten aber die Graustufen mit hoher Präzision fein aufgelöst einstellbar sein. Bei STN-Kristallen mit höherer Verdrillung (180°.. 360°) hingegen reagiert die Molekülausrichtung steiler bis sprunghaft auf die elektrische Spannung, dadurch sind Schwarz-Weiß-Zustände, aber keine Graustufen einstellbar. Aufgrund dieser fehlenden Möglichkeit einer Feinregulierung der Transmission sind STN-Zellen für eine erfindungsgemäße Abschwächeinheit weniger gut geeignet.

Mit einer TN-Zelle hingegen können demgegenüber Graustufenwerte mit hoher Auflösung eingestellt werden.

Der komplexe Aufbau einer DSTN-Flüssigkristallzelle bedingt einen relativ hohen Aufwand bei ihrer Herstellung. Es wurde deshalb ein neues Verfahren entwickelt, das zu flacheren Displays mit geringerem Gewicht führt. Diese neue Lösung trägt den Namen "Triple Super-Twisted Nematic"-LCD (TSTN). Die Farbstörungen der normalen STN-Technik werden durch zwei spezielle Folien ausgeglichen, die vor und hinter der Zelle - zwischen Polarisator und Glas - angebracht sind. Diese Folien sind verantwortlich für einen weiteren Namen dieser Technik: FST, was bedeutet "Film-Super-Twisted" (gelegentlich bezeichnet man Displays, in denen nur eine Kompensationsfolie verwendet wird, als FST-, solche mit zwei oder mehr Folien als TST-LCD; ebenfalls geläufig ist die Bezeichnung FSTN für Film-STN). Der verbesserte Kontrast (bis zu 18:1), das geringere Gewicht und die flachere und weniger aufwendige Bauweise haben TSTN-LC-Displays zum Durchbruch verholfen. In Notebook-Computern wurden solche Displays als "VGA-Bildschirm" erstmals realisiert.

Mit der Kommerzialisierung von Flachbildschirm-TV-Geräten hat die LCD-Entwicklung in den letzten 10 Jahren neuen Auftrieb erhalten.

Es wurden diverse Typen von LC-Zellen entwickelt für Display-Produkte, nämlich twisted nematic (TN), vertical alignment (VA), in-plane switching (IPS) und fringe field switching (FFS). Die Bezeichnung bezieht sich auf die Anordnung der Moleküle des Flüssigkristalls und/oder ihrer Bewegung bei elektrischer Ansteuerung.

Beim Thema LCD-TVs sind davon aktuell zwei Haupttypen führend: Vertical Alignment (VA) Bildschirme und In Plane Switching (IPS) Bildschirme. Der Hauptunterschied besteht darin, wie die Flüssigkristalle zu den Substratplatten angeordnet sind.

Bei der VA -Zelle stehen die länglichen Moleküle senkrecht zu den beiden Glasträgerplatten, wohingegen bei der IPS-oder FFS-Zelle die Moleküle in der Bildschirmebene liegen.

VA-Bildschirme haben einen zur TN-Zelle vergleichbaren Aufbau. Die beiden Elektroden sind jeweils gegenüber des Flüssigkeitsspalts angeordnet. Die Vorteile von VA-Bildschirmen liegt in einem höheren Kontrast (» 1000:1 ist üblich) als bei einem TN-Bildschirm (< 1000:1); jedoch ist die maximale Transmission von VA-Zellen im Allgemeinen geringer als von TN-Zellen.

Bei der In-Plane-Switching-Technik (IPS, englisch für "in der Ebene schaltend") befinden sich die Elektroden nebeneinander in einer Ebene parallel zur Display-Oberfläche. Bei angelegter Spannung drehen sich die Moleküle in der Bildschirmebene; die für TN-Displays typische Schraubenform entfällt. IPS verringert die Blickwinkelabhängigkeit des Kontrastes (eigentlich wird diese als Abhängigkeit von der Sehrichtung oder der Betrachtungsrichtung bezeichnet).

Für den gesuchten Abschwächer wird eine Zelle bestehend aus einem einzigen, aber sehr großen Pixel benötigt. Dieses ist mit der IPS Zelle, bei der die Elektroden auf einer Substratseite angebracht sind, nicht einfach zu realisieren. Wird jedoch die Zelle als Reflexionselement ausgebildet, so kann eine aus der Displaytechnologie bekannte matrixartige Elektrodenanordnung durchwegs zielführend sein.

FFS-Zellen sind für Displays von mobilen, handgetragenen Geräten wie Handys oder Tablet-PCs entwickelt worden.

Die FFS-Technologie ist vergleichbar zu der von IPS. Die Anordnung der Elektroden ist ebenfalls einseitig auf einem Substrat, um ein sogenanntes in-plane Feld zu erzeugen. Bei der IPS-Technologie wechseln sich aber die eine Matrix aufbauenden Plus- und Minus-Elektroden alternierend ab, wohingegen bei der FFS-Technologie die Streifenelektroden alle dasselbe Potential haben und vor einer gemeinsamen großflächigen Gegenelektrode angeordnet sind. Dieses steigert die optische Effizienz der Zelle; beispielsweise ist die maximale Transmission beinahe so hoch (95%) wie bei einer TN-Zelle (Referenzwert 100%). Die anderen beiden Technologien haben eine Transmission von 80% bei IPS und 80% bei VA.

Ein besonderer Vorteil der FFS-Zelle sind der große verwendbare Einfallswinkel und die weite Achromasie durch Autokompensation von polarisiertem Licht. Die durch dielektrische Anisotropie (d.h. die Dielektrizitätskonstante hängt vom Einfallswinkel ab) in Verbindung stehenden Effekte sind bei der FFS-Zelle abgeschwächt. Dieses hängt mit dem entgegengesetzten Verhalten einer positiven Kristallflüssigkeit zusammen, was sich von den anderen unterscheidet, beispielsweise benötigt VA eine negative dielektrische Anisotropie Δε < 0.

Auch sind für FFS-Zellen optimierte Flüssigkristalle mit breiten Temperaturbereichen von -30°C bis +80°C verfügbar.

Mit dem Einfalls- oder Blickwinkel zur LC-Zelle ändert sich die Abschwächung und damit der Kontrast. Für den gesuchten Abschwächer soll die Zelle jedoch einen ausreichend großen Bereich für Einfallswinkel mit hohem Lontrast bereitstellen.

Diese Winkelabhängigkeit ist sowohl durch den Typ der LC-Zelle als auch durch die Anordnung der Polarisatoren festgelegt. Im Hinblick auf das angelegte elektrische Feld können die LC-Zellen in zwei Typen unterteilt werden, nämlich in Zellen mit longitudinalem und transversalem (fringing) Feld. Im Zustand mit einer Spannung U > 0V drehen sich die zigarrenförmigen Moleküle bei der TN-Zelle um 90° längs dem axialen elektrischen Feld, bei der VA-Zelle ebenfalls um 90° senkrecht zum axialen elektrischen Feld; in diesem Fall ist der Gesichtswinkel klein und asymmetrisch, weil der Polarisationeinfluss des LC-Films durch den 90°-Kippwinkel sich unter verschiedenen schiefen Gesichtswinkeln (field of view, FOV) ändert. Insbesondere schwarz verändert sich zu grau.

Bei LCs für Bildschirme wird dieser störende Effekt teilweise behoben, und zwar mittels uniaxialen oder biaxialen Phasenverzögerungsfilmen. Dadurch wird der aus dem LC-Layer heraustretende Polarisationszustand weniger abhängig vom Gesichtswinkel und die Abschwächung bleibt hoch ("reduced light leakage").

Falls durch eine äußere transversale elektrische Spannung die Molekülausrichtung auf eine fixe Ebene beschränkt bleibt, sich die Moleküle in einer Ebene bewegen und neu ausrichten, dann ist der intrinsische Gesichtswinkel größer als bei den longitudinal angesteuerten LC-Zellen. Jedoch ist der eingeschränkte Blockunqsgrad (light leakage) von gekreuzten Polarisatoren bei schiefen Strahlengängen oder Blickwinkeln nach wie vor vorhanden, was wiederum zusätzliche Kompensationsfilme verlangt. Für die Displaytechnologie bekannte Phasenkompensationsfilme sind die A-Filme, wo die optische Achse in der Filmebene liegt und die C-Filme, bei welchen die optische Achse senkrecht zur Filmebene orientiert haben. Der Aufbau einer optischen Konfiguration mit verbessertem Gesichtsfeld bestehend aus Polarisatoren, verschiedener Phasenkompensationsfilmen und einer Flüssigkristallschicht als spezieller Phasenverzögerer wird vorzugsweise unter Zuhilfenahme der Poincare-Kugel-Darstellung entworfen. Der Polarisationszustand für verschiedene Einfallswinkel kann mittels der Poincare-Kugel von Film zu Film verfolgt werden, und der durch die gesamte LC-Zelle erzeugte Polarisationszustand des optischen Strahls auf optimale Auslöschung geprüft werden.

Für die erfinderische LC-Zelle wird in jedem Fall im Offenzustand eine möglichst große Transmission benötigt. Zusätzliche Filme wie die A-Filme oder C-Filme mit intrinsischer Restabsorption sind daher keine gute Lösung.

Die gesuchte LC-Zelle soll daher ohne Kompensationsfilme auskommen. IPS-LC-Zellen sind in dieser Hinsicht vorteilhaft, da sie bereits ohne Phasenkompensationsfilme einen größeren Winkelbereich abdecken.

Jedoch ist die IPS-Technologie für 1-Pixel-Strukturen mit großem Strahldurchmesser ungeeignet, die Homogenität des elektrischen Felds über den Strahlquerschnitt ist nicht ausreichend.

Alle diese nematischen LCD benötigen in Transmission beidseitig Polarisatoren. Dabei können Polymer-Polarisationsfolien mit einseitiger Haftschicht direkt auf die Glasplatten der nematischen LCD-Zelle appliziert sein. Durch Anlegen einer Spannung an die Zelle kann der Drehwinkel der Polarisation des Lichts oder die Phasenverzögerung zwischen zwei orthogonalen Polarisationszuständen gesteuert werden; dadurch lässt sich die Abschwächung einstellen. Durch einen ganz besonderen Aufbau des LC-Abschwächers lassen sich optische Dichten von OD5 oder höher erreichen.

Ziel der vorliegenden Erfindung ist, wie schon erwähnt, einen Abschwächer bereit zu stellen, der als alleinige Abschwächereinheit das Sensorsiqnal über einen Dynamikbereich von 10⁵ variieren kann.

Da bereits ein Abschwächfaktor von 10⁴ schwierig zu erreichen ist, wird als alternative Ausführungsform eine Anordnung bestehend aus zwei LCD-Abschwächereinheiten akzeptiert. Als senderseitige Abschwächereinheit eines elektronischen Distanzmessmoduls wäre beispielsweise eine polarisierende LC-Zelle mit relativ hohem Kontrast gekoppelt mit einer OD von 10⁴ akzeptabel, wenn im Empfangskanal eine LC-Zelle ohne Polarisationseinfluss mit einem niedrigen Kontrast von 10² angeordnet wäre. Als LC-Zellen ohne Polarisationseinfluss kämen "liquid crystal smart glasses", "suspended particle cells" oder andere Licht streuende oder absorbierende Zellen wie beispielsweise ein mit Polymeren eingemischter (dispersed) Flüssigkristall als Abschwächer in Frage.

Aufgabe der Erfindung ist also die Bereitstellung einer variablen optischen Abschwächeinheit, insbesondere für ein elektronisches Distanzmessmodul.

Insbesondere soll eine erzeugte Abschwächung fein justierbar über einen dynamischen Bereich von mindestens fünf Größenordnungen, von nahezu vollständiger Transparenz bis zu einer Abschwächung von 10⁵.

Aufgabe ist außerdem die Erfüllung dieser geforderten Funktion mit möglichst nur einer einzigen optischen Einheit.

Diese Aufgaben werden durch den Gegenstand des unabhängigen Anspruchs 1 erfüllt. Vorteilhafte Weiterbildungen sind den Gegenständen der abhängigen Ansprüche 2-8 zu entnehmen. Das Verfahren zur Herstellung einer Abschwächeinheit ist nicht Teil der Erfindung sondern dient lediglich dem Verständnis.

Die Erfindung stellt eine variable optische Abschwächeinheit, insbesondere für ein elektronisches Distanzmessmodul, zur Verwendung in einem geodätischen Messgerät, insbesondere einem Theodoliten bereit. Erfindungsgemäß erfolgt eine Abschwächung auf die Abschwächeinheit auftreffenden Lichts mittels Flüssigkristallen. Die Abschwächeinheit weist mindestens einen Polarisator, insbesondere ausgebildet als ein Polarisationsblatt, einen Flüssigkristall-Shutter, insbesondere nematische Flüssigkristalle umfassend, mit einer variablen Transmission, einen ersten Analysator, insbesondere ausgebildet als ein Polarisationsblatt, auf.

Damit weist die erfindungsgemäße Abschwächeinheit einen sehr einfachen Aufbau auf.

Vorteilhaft ist das Polarisationsblatt des Polarisators und/oder das Polarisationsblatt des Analysators ausgebildet mit einer einseitig selbstklebenden Folie und aufgeklebt auf einen transparenten Träger, beispielsweise ein Glassubstrat bzw. eine Glassubstratplatte, und/oder einseitig mit einer Anti-Reflexionsschicht, insbesondere optimiert für den Spektralbereich von 660 nm bis 1550 nm, versehen.

Durch die selbstklebenden Folien wird ein sehr kompakter Aufbau und eine einfache Herstellung der erfindungsgemäßen Abschwächeinheit ermöglicht.

Zur Ermöglichung hoher Kontraste ist eine erfindungsgemäße Abschwächeinheit optimiert hinsichtlich der folgenden Aspekte:
- Verwendung von Hochkontrast-Polarisatoren mit hoher Transmission für den einen Polarisationszustand und niedriger Transmission für den anderen Polarisationszustand;
- Optimierung für die jeweilige Einsatzwellenlänge
- Homogenität über die freie Öffnung von Polarisator und Analysatoren;
- Homogenität über die freie Öffnung der Flüssigkristall-Zelle (was insbesondere auch mögliche Verkippung und Phasenänderungen beim Lichtdurchgang betrifft);
- Adäquate Empfindlichkeit und/oder Auflösung, um die gewünschte Abschwächung zwischen den Zuständen maximaler und minimaler Transmission fein einstellbar zu machen;
- Lösung von potentiellen Problemen durch Temperaturdrifts (beispielsweise der Drift der "rel. retardance = -0.4%/K" (Doppelbrechug) muss SW-mässig kompensiert werden
- Berücksichtigung von Isokontrastkurven des Flüssigkristall-Shutters, beispielsweise bei Orientierung zum Laserstrahl mit gleicher azimutaler Orientierung.

Einfache und kostengünstige Polarisatoren sowohl mit hoher Transmission für die eine Schwingungsrichtung und möglichst niedriger Transmission für die andere, orthogonale Schwingungsrichtung sind Kunststofffolien mit ausgerichteten absorbierenden Molekülen oder transversal angeordneten, metallischen Nanostrukturen. Mit solchen Folien sind Kontrastwerte bis 500000 bei 650nm, 800nm oder 1550nm erreichbar.

Gemäß einer vorteilhaften Ausführungsform umfasst der Flüssigkristall-Shutter eine "Twisted Neumatic" Flüssigkristallzelle TN-LCD. Insbesondere weisen der Polarisator und der Analysator A1 eine zueinander gekreuzte, d.h. um 90° zueinander verdrehte Polarisationsrichtung auf. Im Speziellen ist dabei die Flüssigkristallzelle TN-LCD im "Normally-White-Mode" betreibbar.

Twisted Neumatic Flüssigkristallzellen zeichnen sich durch einen vergleichsweise besonders einfachen Aufbau aus. Eine Betreibung einer TN-LC-Zelle im Normally-White-Mode wirkt sich positiv hinsichtlich eines verminderten Energieverbrauchs aus.

Gemäß einer anderen Ausführungsform umfasst der Flüssigkristall-Shutter L eine "FFS"-Flüssigkristallzelle FFS-LCD. FFS steht für "fringe field switching". Die FFS-Technologie basiert auf einem transversalen elektrischen Feld, welches parallel zu den Substrat- oder Glasflächen des Flüssigkristall-Shutters ausgerichtet ist, wobei eine Elektrode E+ und die Gegenelektrode E- sich auf derselben Seite der Zelle befinden und voneinander durch eine Isolationsschicht getrennt sind. Sehr starke Feldamplituden an den Elektrodenkanten ermöglichen ein effektives und schnelles Schalten. Die Elektrodenkonfiguration erzeugt im Vergleich zur IPS-Technologie eine höhere Transmission im Offenzustand. Die Größe der Zellenstruktur ist aber beschränkt, bei Zellen mit nur einem einzigen Pixel, wie für die vorliegende Erfindung erwünscht, wird der Abstand der Elektroden groß, was zu hohen erforderlichen Ansteuerspannungen U, und die Feldstärke E am Rand (Range) der Streifen- oder Hohlelektrode auf sehr große Werte ansteigen lässt, welches gegen die Mitte des Pixels abfällt. Bei, im Vergleich zur Flüssigkeitsdicke, großen Pixeldimensionen, ist das Feld in der Zellenmitte praktisch null, die Schalt-oder Abschwächfunktion ist dort dadurch nicht mehr gegeben. Typischerweise wird dieser Flüssigkristall-Shutter im Normally-Black-Mode betrieben, d.h. im spannungslosen Zustand wird der Durchgang von Licht blockiert; mit angelegter Spannung wird die Zelle transparent.

Gemäß einer weiteren Ausführungsform umfasst der Flüssigkristall-Shutter eine "Vertically Aligned Neumatic" Flüssigkristallzelle VAN-LCD. Bei der VA-Technologie sind die Flüssigkristall-Moleküle in der natürlichen Anordnung, d.h. im Ruhezustand bzw. ohne eine angelegte Spannung, vertikal zu den beiden Glassubstraten oder Glasträgern ausgerichtet. Im Zustand ohne Ansteuerspannung bleiben die Molekülachsen in senkrechter Lage bezüglich der Glasplatten-Ebene, und in Kombination mit gekreuzten Polarisatoren ist die Transmission minimal ("Black" bzw. "Normally Black"). Mit der Zunahme einer angelegten elektrischen Spannung U drehen sich die Moleküle aus dieser vertikalen Lage heraus. Je größer der Kippwinkel der LC-Moleküle ist, umso größer wird die Transmission. Dadurch lassen sich Graustufenwerte und damit die gewünschten optischen Dichten einstellen. Damit sich die Flüssigkristall-Moleküle unter Einwirkung eines elektrischen Felds E aus den elektrischen Feldlinien herausdrehen, sind für VA-Zellen Flüssigkristallmischungen mit negativer dielektrischer Anisotropie erforderlich.

Ohne eine anliegende elektrische Spannung sind die Moleküle beinahe ideal längs der optischen Strahlachse ausgerichtet. Die Polarisation des Lichts wird dabei nicht verändert, was zu einem hohen Kontrast in Kombination mit gekreuzten Polarisatoren führt, und in die Zelle eintretendes Licht kann nicht durch die Zelle hindurchtreten. Mit zunehmender elektrischer Spannung drehen sich die Moleküle aus der Strahlachse heraus, und damit auch das mit der Molekülstruktur verankerte Brechungsindexellipsoid. Doppelbrechung beginnt zu wirken, und der die Flüssigkeit durchquerende Laserstrahl erfährt eine Polarisationsänderung, wodurch beim Passieren des ersten Analysators die Transmission ansteigt. VA-Bildschirme werden wegen des hohen Kontrasts normalerweise in der "normally black" Anordnung betrieben, was bedeutet, dass das LC-Element in Abwesenheit einer anliegenden elektrischen Spannung undurchsichtig ist. Damit sich die Flüssigkristall-Moleküle LC im Zustand ohne elektrische Spannung senkrecht zu den beiden Substratgläsern GS ausrichten, sind letztere mit elektrisch polaren stabilisierenden Polymeren SP versehen.

Vorteilhaft und mit jeder der vorgenannten Ausführungsformen kombinierbar ist ein zweiter Analysator vorgesehen, welcher ebenfalls insbesondere als ein Polarisationsblatt ausgebildet ist. Insbesondere ist das Polarisationsblatt dieses Analysators ebenfalls ausgebildet mit einer einseitig selbstklebenden Folie und aufgeklebt auf einen transparenten Träger und/oder einseitig mit einer AntiReflexionsschicht versehen.

Gemäß einer Ausführungsform sind die Polarisatoren bzw. Analysatoren als lineare Polarisatoren ausgebildet.

Gemäß einer anderen Ausführungsform sind sie als zirkulare Polarisatoren ausgebildet. Dabei sind die zirkularen Polarisatoren insbesondere als eine Kombination eines linearen Polarisators mit einer λ/4-Phasenplatte ausgebildet.

Gemäß einer weiteren Ausführungsform sind die Polarisatoren bzw. Analysatoren als Weitwinkelpolarisatoren, insbesondere mit einer Sandwich-Struktur oder Kombinationsstruktur aus einem Polarisator und einer Phasenplatte, ausgebildet. Vorteilhaft kann dadurch der sogenannte "Light Leakage" Effekt von gekreuzten Polarisatoren bei schrägem Laserstrahl verringert werden, was wesentlich für eine hohe optische Dichte ist.

Typischerweise weisen die Flüssigkristalle eine auf eine Lichtwellenlänge von 650 nm oder 1550 nm optimierte Chromasie auf.

Gemäß einer Ausführungsform sind die Flüssigkristalle mit Spacer-Elementen gemischt. Vorteilhaft weisen diese Spacer-Elemente einen Durchmesser von 3 µm bis 10 µm, insbesondere von 3 µm bis 7 µm auf. Insbesondere sind die Spacer-Elemente als Fasern oder als Glaskugeln ausgebildet.

Durch die kleinen Abmessungen der Spacer-Elemente werden durch diese potentiell verursachte störende Streulichteffekte minimiert.

Typischerweise weisen die Flüssigkristalle einer erfindungsgemäßen Abschwächeinheit über einen Temperaturbereich mindestens von -20°C bis +60°C eine Schaltzeit von kürzer als zehn Millisekunden (für Temperaturen unter 0°C), insbesondere von weniger als einer Millisekunde (für Temperaturen oberhalb von 0°C), auf.

Ein weiterer Gegenstand der Erfindung ist ein elektronisches Distanzmessmodul (EDM) mit einem optischen Sendekanal und einem optischen Empfangskanal. Erfindungsgemäß ist dabei eine erfindungsgemäße Abschwächeinheit nach einer der vorgenannten Ausführungsformen im optischen Sendekanal oder im optischen Empfangskanal, oder in beiden Kanälen angeordnet.

Gemäß einer Ausführungsform weist das elektronische Distanzmessmodul im optischen Sendekanal eine erfindungsgemäße Abschwächeinheit und im optischen Empfangskanal lediglich einen polarisationsunabhängigen Flüssigkristall-Shutter mit einer variablen Transmission, aber ohne zugeordneten Polarisator und/oder Analysator, auf. Beispielsweise sind LC-Zellen polarisationsfrei, die auf dem Prinzip des dynamischen Streumodus (danymic sscattering mode, DSM) funktionieren, wobei deren einstellbarer Abschwächbereich typischerweise kleiner als 500 ist.

Gemäß einer anderen Ausführungsform weist das elektronische Distanzmessmodul ebenfalls im optischen Sendekanal eine erfindungsgemäße Abschwächeinheit auf, während und in dem optischen Empfangskanal ein polarisationsselektiver Strahlteiler zur polarisationsselektiven Aufspaltung des Empfangslichts in zwei, dem polarisationsselektiven Strahlteiler im optischen Pfad nachfolgende, Teilstrahlen unterschiedlicher Polarisation angeordnet ist, in deren optischen Wegen jeweils eine erfindungsgemäße Abschwächeinheit angeordnet ist. Dabei ist erwünscht, dass die Teilstrahlen auf gleiche optische Weglängen und gleiche Lichtlaufzeiten eingestellt sind.

Gemäß einer weiteren Ausführungsform, ähnlich zu der vorgenannten Ausführungsform, weist das elektronische Distanzmessmodul ebenfalls im optischen Sendekanal eine erfindungsgemäße Abschwächeinheit und in dem optischen Empfangskanal einen polarisationsselektiven Strahlteiler zur polarisationsselektiven Aufspaltung des Empfangslichts in zwei, dem polarisationsselektiven Strahlteiler im optischen Pfad nachfolgende, Teilstrahlen unterschiedlicher Polarisation auf. Gemäß dieser Ausführungsform ist aber in einem der beiden Teilstrahlen eine λ/2-Platte im optischen Weg nachfolgend zu dem polarisationsselektiven Strahlteiler angeordnet. Beide Teilstrahlen werden dann einer gemeinsamen erfindungsgemäßen Abschwächeinheit zugeführt. Insbesondere sind auch gemäß dieses Ausführungsbeispiels die Teilstrahlen auf gleiche optische Weglängen und gleiche Lichtlaufzeiten eingestellt.

Ein weiterer Gegenstand der Erfindung ist ein Verfahren zur Herstellung einer erfindungsgemäßen Abschwächeinheit. Dieses Verfahren weist die folgenden Schritte auf:
- Anordnen des Flüssigkristall-Shutters zwischen für den Polarisator und den ersten Analysator vorgesehenen Positionen und Anlegen einer Spannung, insbesondere einer Rechteckspannung von 5 V bis 20 V (pp) und 0.2 kHz bis 2 kHz, an den Flüssigkristall-Shutters;
- Drehen des Flüssigkristall-Shutters um die optische Achse eines eingestrahlten Laserstrahls, bis ein beobachtetes Lasersignal ein Minimum erreicht, insbesondere mit einer Winkeltoleranz von ±1° bis ±2°;
- Verbinden des Polarisators mit dem Flüssigkristall-Shutter, insbesondere im Fall eines als ein Polarisationsblatts ausgebildeten Polarisators durch Aufkleben des Polarisationsblatts auf eine Glassubstrat-Platte des Flüssigkristall-Shutters;
- Positionieren des ersten Analysators nach dem Flüssigkristall-Shutter, insbesondere Ersetzen eines gegebenenfalls vorangehend positionierten Glan-Thompson Prismas;
- Drehen des ersten Analysators um die optische Achse des eingestrahlten Laserstrahls, bis ein beobachtetes Lasersignal ein Minimum erreicht, insbesondere mit einer Winkeltoleranz von ± 0.1° oder genauer;
- Gegebenenfalls im Fall eines als ein Polarisationsblatt ausgebildeten ersten Analysators Aufkleben des Polarisationsblatts auf eine Glassubstrat-Platte des Flüssigkristall-Shutters.

Damit ist diese erste Ausführungsform des erfindungsgemäßen Herstellungsverfahrens abgeschlossen.

Gemäß einer Weiterbildung werden zur Ausstattung der Abschwächungseinheit mit einem zweiten Analysator im Anschluss an die oberen Schritte die folgenden weiteren Verfahrensschritte durchgeführt:
- bei ausgeschalteter Spannung an dem Flüssigkristall-Shutter Anordnen eines zweiten Analysators (A2) "hinter dem Flüssigkristall-Shutter";
- bei ausgeschalteter Spannung an dem Flüssigkristall-Shutter Drehen des zweiten Analysators um die Achse eines eingestrahlten Laserstrahls, bis ein beobachtetes Lasersignal ein Maximum erreicht, insbesondere mit einer Winkeltoleranz von +/- 1° bis 5°.

Damit ist auch diese modifizierte Ausführungsform des erfindungsgemäßen Herstellungsverfahrens abgeschlossen.

Damit eine erfindungsgemäße Abschwächeinheit die geforderten Spezifikationen erreichen kann, ist für das erfindungsgemäße Herstellungsverfahren erforderlich, dass die optischen Achsen von Polarisator, Analysatoren und Flüssigkristall-Shutter gegenseitig auf mindestens 1°, und dass insbesondere die optischen Achsen von Polarisator und und Analysatoren auf gegenseitig 0.1° Genauigkeit oder genauer, ausgerichtet werden. Vorteilhaft wird dabei die Ausrichtung unter Benutzung einer Hilfs-Laserquelle gemessen und überwacht.

Bei der Montage eines Flüssigkristall-Shutters und seiner Ausrichtung zum Laserstrahl in einem EDM-Modul ist zu beachten:
- Der optimale Ausrichtungswinkel wird durch das Isokontrastkurvendiagramm bestimmt. (Dieser Begriff wird im Beschreibungsteil dieser Anmeldung genauer erklärt.)
- Der optimale Ausrichtungswinkel beeinflusst die Abschwächkurve des Elements.
- Ein Störeinfluss durch Rückreflexe von den optischen Flächen der Flüssigkristallzelle ist zu verhindern.

Bei korrekter Ausführung des Verfahrens wird ein variabler Einstellbereich des Kontrasts von 1 bis 10⁵ erreicht, womit die geforderten Spezifikationen erfüllt werden. Unter dem Kontrast versteht man dabei das Verhältnis zwischen einstellbarer maximaler und minimaler Transmission. Falls die maximale Transmission kleiner ist als 1, braucht es eine optische Dichte von mehr als 10⁵ , damit ein Kontrast von 10⁵ erreichbar ist.

Testserien an TN-Flüssigkristall-Shuttern, welche nach dem beschriebenen Verfahren hergestellt wurden, haben gezeigt, dass Kontrastwerte bis 1 : 250 000 erreichbar sind. Insbesondere TN-Flüssigkristall-Shutter erscheinen daher als besonders gut geeignet für eine erfindungsgemäße Abschwächeinheit.

Zudem wurden mit den TN-Zellen- neben den FFS-Strukturen - im lichtdurchlässigen Zustand des Flüssigkristall-Shutters die höchsten Transmissionswerte erreicht, was zur Ermöglichung einer eingeschränkten optischen Leistung der Lichtquellen vorteilhaft ist, und insbesondere bei batteriebetriebenen Instrumenten den Energieverbrauch reduziert.

Die Erfindung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a: als ein erstes Beispiel für ein geodätisches Messgerät, in dem ein elektronisches Distanzmessmodul Einsatz findet, einen Theodoliten;
- Fig. 1b: als ein zweites Beispiel für ein geodätisches Messgerät, in dem ein elektronisches Distanzmessmodul Einsatz findet, einen terrestrialen Scanner;
- Fig. 2: ein Schema eines möglichen prinzipiellen optischen Aufbaus des Scanners von Fig. 1b;
- Fig. 3: schematisch das Grundprinzip einer erfindungsgemäßen optischen Abschwächeinheit;
- Fig. 4: eine Illustration der Funktionsweise einer bevorzugten Ausführungsform einer erfindungsgemäßen optischen Abschwächeinheit;
- Fig. 5: eine Illustration der Regulierbarkeit der Abschwächung einer erfindungsgemäßen TN-LC-Zelle, als Funktion der Distanz zu einem reflektierenden Ziel;
- Fig. 6: für eine erfindungsgemäße TN-LC-Zelle die gemessene Laserintensität als Funktion der zwischen den Substratplatten der Zelle angelegten Spannung und der Ansteuerfrequenz;
- Fig. 7: eine Illustration des Aufbaus eines erfindungsgemäßen FFS-Flüssigkristall-Shutters;
- Fig. 8: Illustrationen des Aufbaus eines erfindungsgemäßen VA-Flüssigkristall-Shutters VA-LCD;
- Fig. 9: eine Illustration einer Mischung von Flüssigkristallmolekülen mit elektrisch polaren stabilisierenden Polymeren und ein zugehöriges Herstellverfahren;

- Fig. 10: eine Illustration der Winkelabhängigkeit des Kontrastes (Blickwinkel) von TN-LC-Zellen;
- Fig. 11: eine Illustration der Wirkungsweise einer auf den Glassubstraten der TN-Zelle eines erfindungsgemäßen Flüssigkristall-Shutters aufgebrachten Polymerschicht als Orientierungsschicht für die Flüssigkristall-Moleküle;
- Fig. 12: eine Darstellung elektro-optischer Kennlinien für verschiedene Laser-Einfallswinkel anhand einer Auftragung der Transmission als Funktion der an die TN-Zelle angelegten Spannung U für verschiedene Blickwinkel;
- Fig. 13: mikroskopische Aufnahmen von einer TN-Flüssigkristall-Zelle mit einer Mischung von Flüssigkristall-Molekülen mit Spacern im Durchlicht, ohne Kombination der TN-LCD mit Polarisatoren;
- Fig. 14: eine Illustration des Kontrastverhaltens einer erfindungsgemäßen TN-LC-Abschwächeinheit;
- Fig. 15: eine qualitative Darstellung des Einflusses des LCD-Kippwinkels zur Laserstrahlrichtung;
- Fig. 16: in tabellarischer Form eine Zusammenfassung eines erfindungsgemäßen Verfahrens zur Herstellung eines erfindungsgemäßen Flüssigkristall-Shutters;
- Fig. 17: eine Ausführungsform einer erfindungsgemäßen optischen Abschwächeinheit mit gemischt polarisiertem (s-polarisiertem und p-polarisiertem) Eingangslicht;
- Fig. 18: eine weitere Ausführungsform einer erfindungsgemäßen optischen Abschwächeinheit mit gemischt polarisiertem (s-polarisiertem und ppolarisiertem) Eingangslicht;
- Fig. 19: eine zu der Ausführungsform von Fig. 18 alternative Ausführungsform einer erfindungsgemäßen optischen Abschwächeinheit mit gemischt polarisiertem (s-polarisiertem und p-polarisiertem) Eingangslicht;
- Fig. 20: Beispiele für polarisationsselektive Strahlteiler PB zum Aufsplitten einer unpolarisierten Empfangsstrahlung;
- Fig. 21: ein Schema des optischen Aufbaus einer ersten Ausführunngsform eines erfindungsgemäßen elektronischen Distanzmessmoduls mit einer erfindungsgemäßen optischen Abschwächeinheit; und
- Fig. 22: ein Schema des optischen Aufbaus einer zweiten Ausführungsform eines erfindungsgemäßen elektronischen Distanzmessmoduls mit einer erfindungsgemäßen optischen Abschwächeinheit.

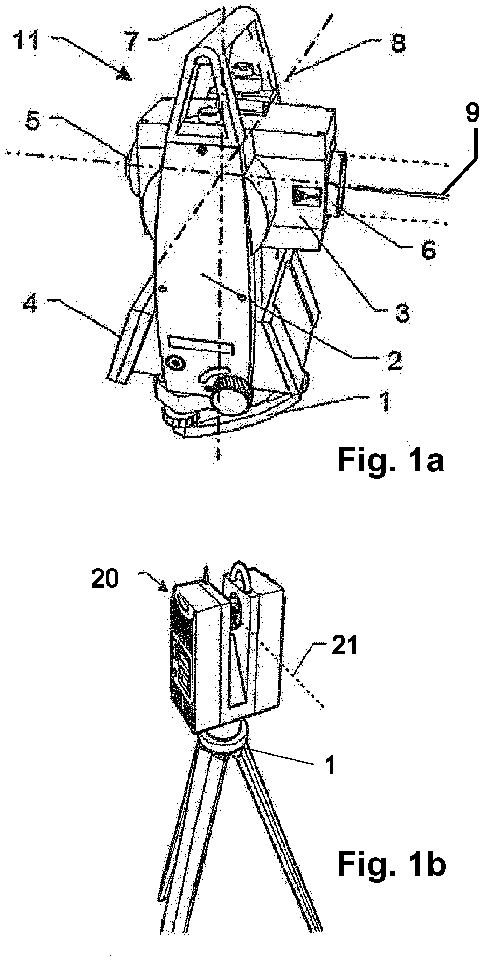

**Fig. 1a** zeigt, als ein erstes Beispiel für ein geodätisches Messgerät, in dem ein elektronisches Distanzmessmodul Einsatz findet, einen Theodoliten. Der Theodolit 11 umfasst eine Basis 1 mit einem darauf drehbar gelagerten Oberteil 2. Eine am Oberteil 2 schwenkbar gelagerte Anzieleinheit 3 mit einem Objektiv 6 mit einer optischen Achse 5 (Anzielachse) ist typischerweise mit einer zu einer Emission eines Laserstrahls 9 ausgebildeten Laserquelle und einem Laserlicht-Detektor ausgestattet und stellt damit eine Distanzmessfunktionalität zur Bestimmung der Position eines Zielobjekts bereit. Des Weiteren ist der Theodolit 11 mit einer Ausgabeeinheit 4, insbesondere mit einem Display, ausgestattet. Zudem verfügt das Gerät zur Ausrichtung auf ein Objekt über zwei senkrecht zueinander stehende Achsen 7, 8 (Stehachse 7 und Kippachse 8).

Fig. 1b zeigt, als ein zweites Beispiel für ein geodätisches Messgerät, in dem ein elektronisches Distanzmessmodul Einsatz findet, einen terrestrialen Scanner 20 zum berührungslosen Abtasten eines entfernten Objekts in drei oder zwei Dimensionen. Der Laserscanner 20 kann zur speziellen Überwachung, Erfassung, Digitalisierung, usw. von statischen oder dynamischen Objekten geeignet sein. Der Laserscanner 20 ist auf einer Basis 1 drehbar gelagert und kann durch 360°-Schwenkungen um zwei Schwenkachsen ein Vollpanorama mit einem Sichtfeld von 360°×360° abtasten und so eine Szenerie mit mehreren Objekten mittels eines durch einen nicht dargestellten Spiegels in Richtung Objekt ausgesandter Messlichtstrahlen 21 abtasten.

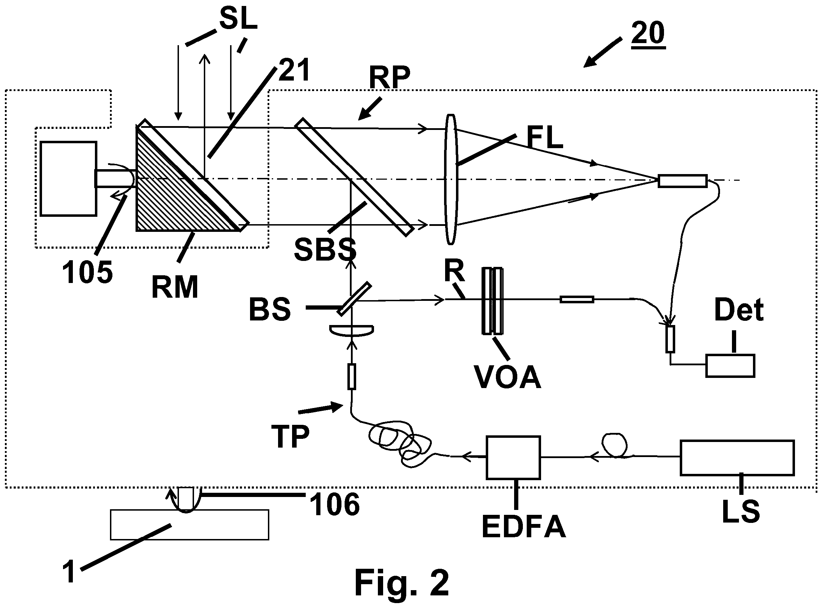

Fig. 2 zeigt ein Schema eines möglichen prinzipiellen optischen Aufbaus des Scanners 20 von Fig. 1b, in dem eine elektronische oder opto-elektronische Abschwächeinheit nach dem Stand der Technik eingesetzt wird. Das Emissionslicht einer Lichtquelle LS, typischerweise eines Lasers, wird auf dem Tranmissionslichtpfad TP (Sendekanal) zunächst zu einem optischen Verstärker EDFA ("erbium-doped fiber amplifier"), der das Eingangslicht, typischerweise in variabler Weise, optisch verstärkt. Das Licht gelangt dann zu einem Strahlteiler BS, in dem ein Teil des Lichts in einen Referenzlichtweg R, in dem eine variable optische Abschwächeinheit VOA angeordnet ist, umgelenkt wird. Der andere Teil des Lichts aus dem Transmissionslichtpfad TP gelangt weiter zu einem dielektrischen Strahlteiler SBS, an dem das Licht zu einem rotierenden Spiegel RM umgelenkt wird, auf dessen Oberfläche es unter einem Winkel von beispielsweise 45° zur Drehachse auftrifft, so dass es dort in der Regel rechtwinklig zu seiner Richtung vor dem rotierenden Spiegel RM als Messlicht 21 in Richtung eines zu scannenden Objekts umgelenkt wird. Der Rotationsspiegel RM ist typischerweise um 360° rotierbar, wie durch den Pfeil 105 angedeutet. Am Objekt gestreutes oder reflektiertes sowie vom Objekt ausgehendes sonstiges Licht gelangt gemeinsam als Scan-Licht SL im Empfangslichtpfad RP zurück zu dem rotierenden Spiegel RM und wird von dort zu dem, je nach Ausführungsart, spektral selektiven Strahlteiler SBS transmittiert. Das Licht im Empfangspfad RP wird dann von einer Objektiv- oder Fokussierlinse FL fokussiert, beispielsweise auf den optischen Eingang einer Glasfaser als optischem Lichtleiter, von wo es, ebenso wie das Licht aus dem Referenzlichtweg R, einem Detektor Det zugeführt wird. Die dargestellten Lichtwege R, TP und RP können zu großen Teilen durch lichtübertragende optische Fasern realisiert sein.

Der, durch eine punktierte Linie eingefasst angedeutete, obere Teil des Scanners 20 ist auf einer Basis 1 montiert, gegenüber der dieser obere Teil horizontal drehbar ist, wie durch den Pfeil 106 angedeutet.

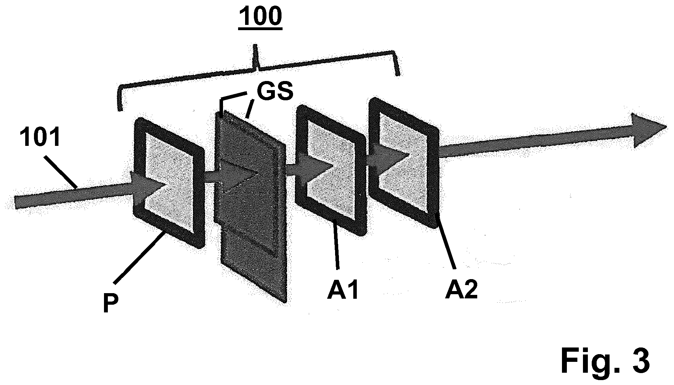

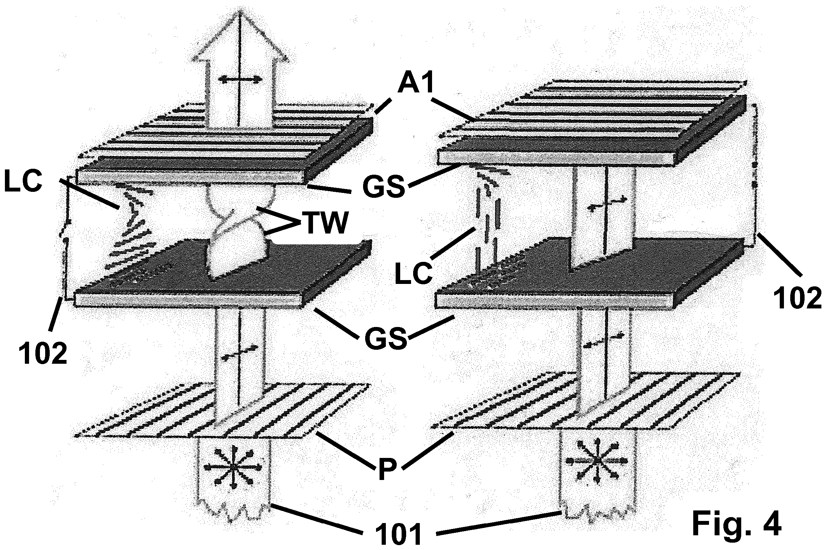

**Fig. 3** zeigt schematisch das Grundprinzip einer erfindungsgemäßen optischen Abschwächeinheit 100; die Funktionsweise einer bevorzugten Ausführungsform dieser Abschwächeinheit 100 ist in **Fig. 4** illustriert. Das Kernstück der Abschwächeinheit 100 wird durch einen Flüssigkristall-Shutter (TN-LC) L verkörpert. Der Flüssigkristall-Shutter L umfasst zwei Substratgläser GS, im Folgenden auch bezeichnet als "Substratplatten" oder "Deckgläser", die mit einer dünnen Polymerschicht versehen sind, deren Moleküle durch einen Wischprozess ausgerichtet sind. Das Ausrichten der Moleküle durch Wischen wird auch als "Bürsten" bezeichnet. Die polymerbeschichteten Substratgläser GS sind in nur geringem Abstand voneinander angeordnet, was in Fig. 3 durch die gegenseitig versetzte Anordnung angedeutet ist. Zwischen den beiden Substratgläsern GS sind Flüssigkristalle, vorzugsweise nematische Flüssigkristalle, angeordnet. Die Moleküle des Flüssigkristalls richten sich im Fall von TN-Zellen parallel zu den auf dem Deckglas GS befindlichen Polymeren aus. Sind die beiden Substratplatten GS gegeneinander um 90° verschwenkt (was bei dem in Fig. 4 dargestellten Beispiel der Fall ist), dann ergibt sich eine schraubenförmige Struktur im Flüssigkristall; bei einer um 90° gedrehten Schraube, wie in diesem Beispiel, spricht man von TN ("Twisted Neumatic").

Der gedrehte nematische Flüssigkristall hat die Eigenschaft, dass er die Schwingungsebene linear polarisierten Lichtes seiner Schraubenform folgen lässt. Die Polarisation folgt unter gewissen Voraussetzungen(= Mauguin Limit) dem Twist der chiralen Struktur. Liegt ein elektrisches Feld an der TN-Zelle, dann richten sich die Moleküle entlang des elektrischen Feldes aus und die Schraubenform verschwindet. Linear polarisiertes Licht wird nicht mehr gedreht. Diese spezielle Eigenschaft macht die TN-Zelle zum variablen Polarisationsrotator.

Da die Schaltgeschwindigkeit groß sein soll, ist der Plattenabstand klein und die Flüssigkeitsschicht dünn.

Im linken Teil von **Fig. 4** ist die Funktionsweise der TN-Flüssigkeitszelle in Abwesenheit einer an die Substratplatten angelegten elektrischen Spannung. Dieses ist durch die unterbrochene Kontaktleitung 102 zwischen den beiden Platten angedeutet. Gemäß der dargestellten Ausführungsform sind der Polarisator P selbsttragend und der Analysator A1 als ein - bezüglich der Richtung eingestrahlten Lichts - auf die Rückseite der zweiten (hier oberen) Substratplatte aufgeklebten Polarisationsfolie, auch bezeichnet Polarisationsblatt ausgebildet, wobei Polarisator P und Analysator A1 eine lineare, zueinander gekreuzte Polarisation aufweisen. Auf den Polarisator P eintreffendes, beispielsweise unpolarisiertes oder zirkular polarisiertes, Licht wird linear polarisiert, bevor es auf den Flüssigkristall-Shutter L auftrifft. Durch die chirale Struktur der Flüssigkristalle, in Form einer 90°-Schraube, zwischen den beiden Substratplatten GS wird die Polarisation des Lichts um 90° gedreht, so dass das linear polarisierte Licht auch durch den Analysator A1 hindurchtreten kann.

Im rechten Teil von Fig. 4 ist die Situation dargestellt, in der zwischen den beiden Substratplatten GS eine elektrische Spannung anliegt (geschlossene Kontaktleitung 102). Jetzt richten sich die Flüssigkristalle entlang des elektrischen Feldes aus, und die Polarisationsrichtung wird nicht mehr im Flüssigkristall-Shutter L gedreht, so dass es durch den Analysator A1 nicht mehr hindurchtreten kann.

Gemäß der in Fig. 4 dargestellten Ausführungsform ist der Flüssigkristall-Shutter L also im Ruhezustand, d.h. ohne anliegende Spannung, transparent und blockiert den Lichtdurchtritt bei anliegender elektrischer Spannung. Daher arbeitet diese Ausführungsform bzw. ihre Betriebsfunktion als "Normally-White-Mode".

Ordnet man die Polarisationsfilter (Polarisator P und Analysator A1) parallel zueinander an, dann ist die Zelle ohne Spannung dunkel und wird erst mit zunehmender Spannung transparent. Man spricht dann vom "Normally-Black-Mode". Dieser Typ zeigt zwar symmetrischere Isokontrastplots (siehe dazu auch weiter unten) bezüglich des Blickwinkels oder Lasereinstrahlwinkels, ist aber bei TN-LC-Zellen hinsichtlich des Maximalkontrasts dem Normally-White-Mode unterlegen, welcher daher gemäß der vorliegenden Erfindung bevorzugt wird. Ein weiterer Vorteil des Normally-White-Modes bei TN-Zellen ist, dass das Problem des Temperaturdrifts der Doppelbrechung (Retardance) des Flüssigkristalls praktisch nicht vorhanden ist; denn im Zustand maximaler Abschwächung ist die Doppelbrechung der TN-LC-Zelle in die Laserstrahlrichtung nicht vorhanden oder zumindest minimal. Die maximale Abschwächung wird daher vorwiegend durch das Polarisatorenpaar bestimmt und nur in zweiter Ordnung durch Eigenschaften der TN-LC-Zelle.

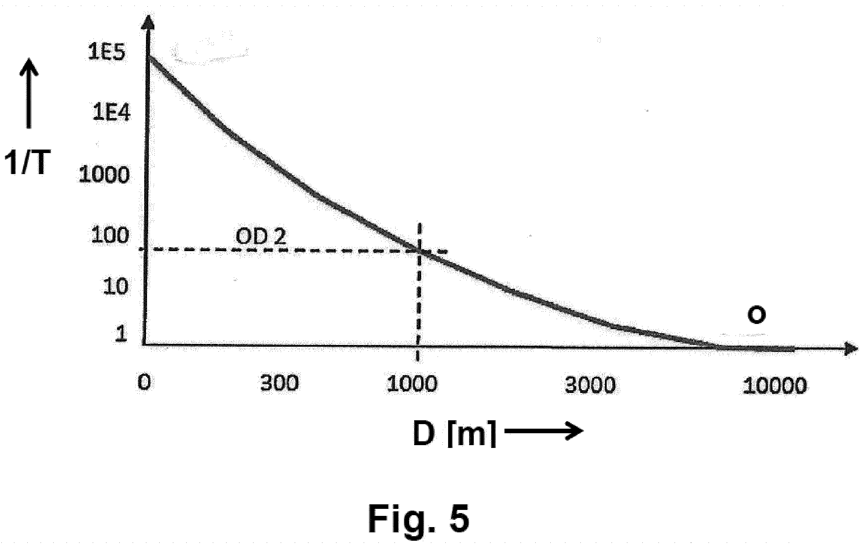

**Fig. 5** illustriert die Regulierbarkeit der Abschwächung, d.h. des Inversen 1/T der Transmission T, einer erfindungsgemäßen TN-LC-Zelle, als Funktion der mit einem Distanzmessmodul zu messenden Distanz D zu einem stark reflektierenden Ziel. Um bei sehr nahe gelegenen Zielen ein auswertbares Signal, d.h. ohne Detektorsättigung, zu erreichen, muss eine sehr hohe Abschwächung von 10⁵ eingestellt werden. Für weiter entfernt gelegene Ziel wird die erforderliche Abschwächung immer geringer, bis hin zu einer vollständigen Transmission (1/T = 1) beispielsweise für eine Entfernung von 10 000 Metern. Natürlich ist die Transmission im offenen Zustand weniger als 100 %; erreichbare Werte liegen bei 80 %. Daher muss das Element eine Abschwächung von 10⁵ / 0.80 = 1.25·10⁵ bereitstellen.

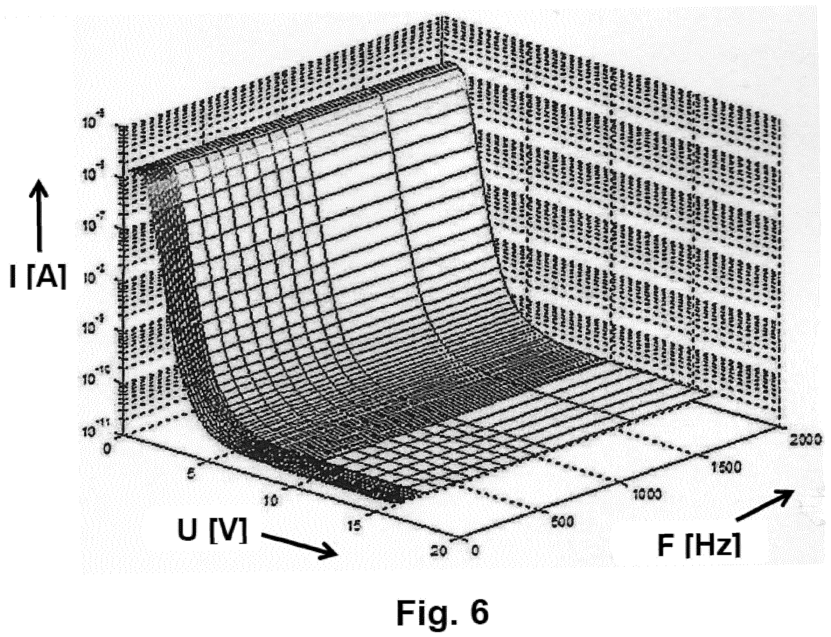

**Fig. 6** zeigt für eine erfindungsgemäße TN-LC-Zelle die gemessene Laserintensität I (in Ampere) als Funktion der zwischen den Substratplatten angelegten Spannung U und der Ansteuerfrequenz F. Auch aus dieser Darstellung ergibt sich, dass die erfindungsgemäße LC-Zelle einen regulierbaren Kontrast bis mindestens 10⁵ ermöglicht. Eine Variation der Frequenz der Ansteuerspannung F zwischen 100 Hz und 2000 Hz hat keinen wesentlichen Einfluss auf das optische Verhalten.

Demzufolge ergibt sich als eine typische Betriebsweise eines erfindungsgemäßen TN-Flüssigkristall-Shutters: Die LC-Zellen werden mit Wechselspannungen im Frequenzbereich zwischen 20 Hz und 2 kHz angesteuert. Die optimale Ansteuerung ist durch die Temperatur bestimmt. Bei Temperaturen größer als 0°C ist die Schaltgeschwindigkeit der LC-Flüssigkeiten im Millisekunden-Bereich, die optimalen Ansteuerfrequenzen liegen daher bei etwa einem kHz, bei Temperaturen unter 0°C werden bessere Abschwächungseinstellungen erzielt für Ansteuerfrequenzen von ca 100Hz.

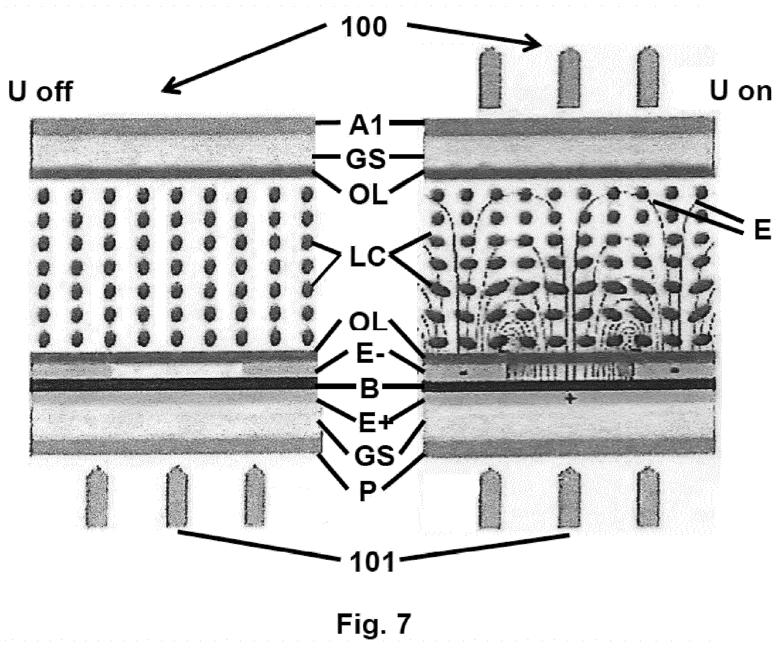

**Fig. 7** illustriert den Aufbau eines erfindungsgemäßen FFS-Flüssigkristall-Shutters FFSN-LCD. FFS steht für "fringe field switching" (im linken Bildteil ohne an die Elektroden angelegte Spannung ("U off"), im rechten Bildteil mit an die Elektroden angelegter Spannung ("U on")). Die FFS-Technologie basiert auf einem transversalen elektrischen Feld, welches parallel zu den Substrat- oder Glasflächen GS des Flüssigkristall-Shutters ausgerichtet ist. Die Figur zeigt den Zellenaufbau mit der Elektrodenkonfiguration, wobei die Elektrode E+ und die Gegenelektrode E- sich auf derselben Seite der Zelle befinden und voneinander durch eine Isolationsschicht B getrennt sind. In Richtung der Flüssigkristalle LC sind die Elektroden jeweils mit einer, im Allgemeinen aus Polymeren bestehenden, sogenannten Orientierungsschicht OL beschichtet. Die elektrischen Felder E sind in der rechten Bildhälfte als Linien eingezeichnet. Die sehr starken Feldamplituden an den Elektrodenkanten ermöglichen ein effektives und schnelles Schalten. Die Elektrodenkonfiguration erzeugt im Vergleich zur IPS-Technologie im Offenzustand eine höhere Transmission. Die Größe der Zellenstruktur ist aber beschränkt. Bei Zellen mit nur einem einzigen Pixel, wie für die vorliegende Erfindung erwünscht, wird der Abstand der Elektroden groß, was zu hohen Ansteuerspannungen U führt, und die Feldstärke E am Rand (Range) der Streifen- oder Hohlelektrode auf sehr große Werte ansteigen lässt, welche gegen die Mitte des Pixels abfallen. Bei, im Vergleich zur Flüssigkeitsdicke, großen Pixeldimensionen, ist das Feld in der Zellenmitte praktisch null, die Schalt-oder Abschwächfunktion ist dort dadurch faktisch nicht mehr gegeben.

Gemäß der in Fig. 7 gezeigten Anordnung wird dieser Flüssigkristall-Shutter im Normally-Black-Mode betrieben, d.h. im spannungslosen Zustand ("U off") wird der Durchgang des Lichts 101 blockiert; mit angelegter Spannung wird die Zelle transparent.

Da mit FFS-Zellen ein vergleichbar hoher Kontrast erreicht werden kann, eignet sich dieser Zellentyp in Matrixstruktur als variabler optischer Abschwächer (VOA) in Empfangskanälen von Distanzmessmodulen. Die Matrixstruktur besteht dabei aus einem Array von vielen, beispielsweise 10 bis 1000 Pixeln. Beugungseffekte erhöhen dabei den Kontrast zusätzlich.

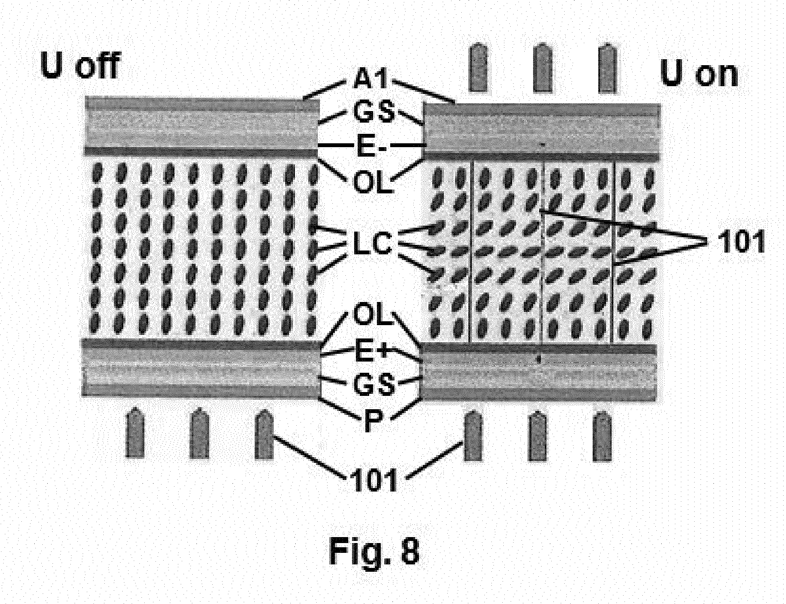

**Fig.** 8 illustriert den Aufbau eines erfindungsgemäßen VA-Flüssigkristall-Shutters VA-LCD. Bei der VA-Technologie sind die Flüssigkristall-Moleküle LC in der natürlichen Anordnung, d.h. im Ruhezustand bzw. ohne eine angelegte Spannung, vertikal zu den beiden Glassubstraten oder Glasträgern GS ausgerichtet. Im Zustand ohne Ansteuerspannung U bleiben die Molekülachsen in senkrechter Lage bezüglich der Glasplatten-Ebene, und in Kombination mit gekreuzten Polarisatoren ist die Transmission minimal ("Black" bzw. "Normally Black"). Mit der Zunahme einer angelegten elektrischen Spannung U drehen sich die Moleküle aus dieser vertikalen Lage heraus. Je größer der Kippwinkel der LC-Moleküle ist, umso größer wird die Transmission. Dadurch lassen sich Graustufenwerte und damit die gewünschten optischen Dichten einstellen. Damit sich die Flüssigkristall-Moleküle LC unter Einwirkung eines elektrischen Felds E aus den elektrischen Feldlinien herausdrehen, sind für VA-Zellen Flüssigkristallmischungen mit negativer dielektrischer Anisotropie Δε < 0 erforderlich.

Ohne eine anliegende elektrische Spannung U sind die Moleküle beinahe ideal längs der optischen Strahlachse ausgerichtet. Die Polarisation des Lichts wird dabei nicht verändert, was zu einem hohen Kontrast in Kombination mit gekreuzten Polarisatoren führt, und in die Zelle eintretendes Licht 101 kann nicht durch die Zelle hindurchtreten (T = 0). Mit zunehmender elektrischer Spannung U drehen sich die Moleküle aus der Strahlachse heraus, und damit auch das mit der Molekülstruktur verankerte Brechungsindexellipsoid. Doppelbrechung beginnt zu wirken, und der die Flüssigkeit durchquerende Laserstrahl 101 erfährt eine Polarisationsänderung, wodurch die Transmission beim Passieren des Analysators A1 ansteigt. VA-Bildschirme werden wegen des hohen Kontrasts normalerweise in der Normally-Black-Anordnung betrieben (wie hier dargestellt), was bedeutet, dass das LC-Element in Abwesenheit einer anliegenden elektrischen Spannung undurchsichtig ist.

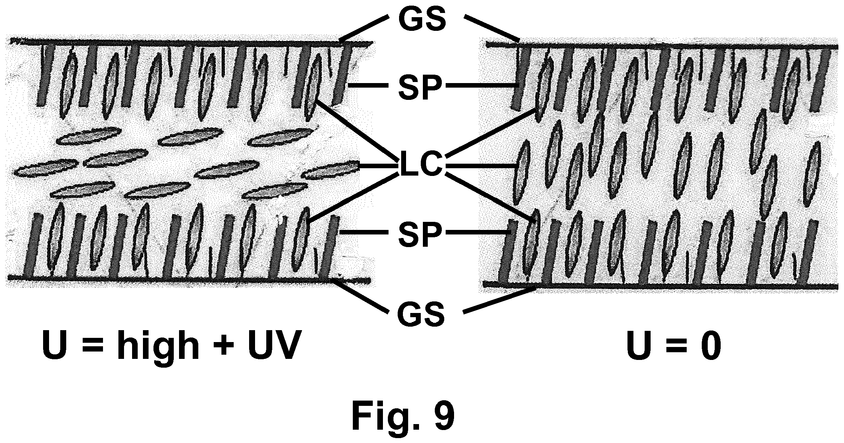

Damit sich die Flüssigkristall-Moleküle LC im Zustand ohne elektrische Spannung senkrecht zu den beiden Substratgläsern GS ausrichten, sind letztere mit elektrisch polaren stabilisierenden Polymeren SP versehen. Dieses ist in **Fig. 9** gezeigt. Die Figur deutet zudem einen möglichen Herstellprozess an, bei welchem die elektrisch polaren Stützmoleküle mittels hoher angelegter elektrischer Spannung ausgerichtet und dabei mittels Polymerisation infolge von Einstrahlung von UV-Licht ("U = high + UV") in den Festzustand überführt werden. Dabei haben die FlüssigkristallMoleküle eine Länge von etwa 2 nm bis 5 nm, während die Polymermoleküle typischerweise eine Länge von etwa 100 nm aufweisen.

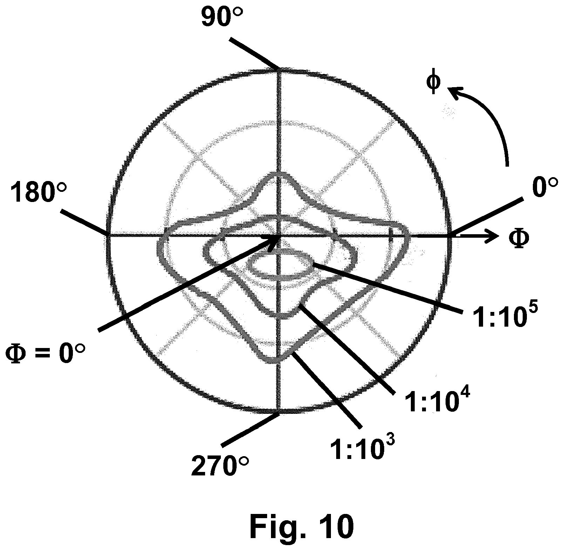

**Fig. 10** illustriert die Winkelabhängigkeit des Kontrastes (Blickwinkel) von TN-LC-Zellen (90°). Die Blickwinkelabhängigkeit des Kontrastes entspricht der Lasereinfallsrichtung) und wird typischerweise in Form derartiger sogenannter "Isokontrastkurven" dar, wobei als Koordinaten der Winkel zwischen der Normalen der LC-Zelle und dem Laserstrahl (= Polarwinkel **Φ**) und den Azimutwinkel (= Drehwinkel φ) verwendet werden. Der Polarwinkel beträgt Null in Richtung des Polarisators der Zelle. Das Profil ist nicht rotatorisch symmetrisch, sondern zeigt für die Isokontrastkurven für die von innen nach außen aufeinander folgenden Linien für Kontrastwerte von 1 : 10⁵, 1 : 10⁴ und 1 : 10³, welche jeweils Zonen mit gleichem Kontrast darstellen, eine vom Polarwinkel 0° als zu davon abweichende Verschiebung. Das Gebiet des größten Kontrasts liegt gemäß dieser Darstellung unterhalb des Zentrums auf der Geraden mit Azimutwinkel 270° vor.

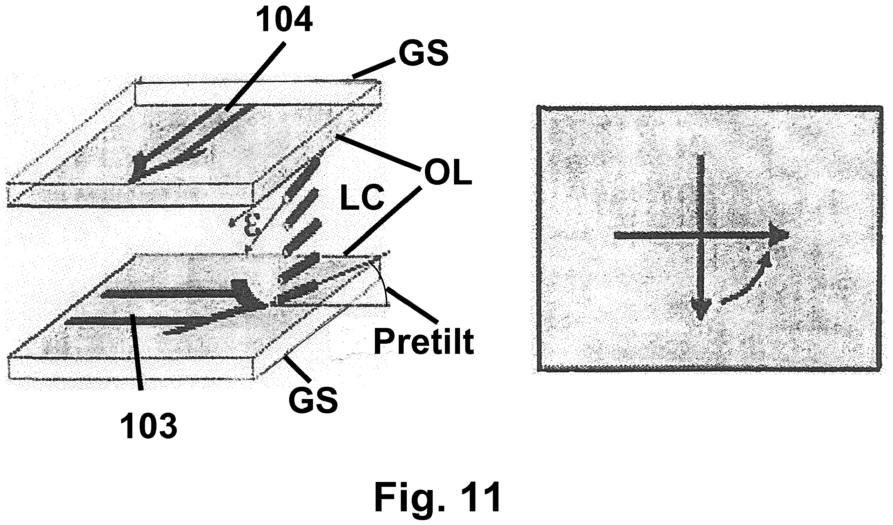

**Fig. 11** illustriert die Wirkungsweise einer auf den Glassubstraten GS der TN-Zelle eines erfindungsgemäßen Flüssigkristall-Shutters L aufgebrachten speziellen Polymerschicht. Gemäß dieses Beispiels bestehen die transparenten Elektroden an den die TN-LC-Zelle begrenzenden Glasplatten GS aus Indium-Zinnoxid (ITO). Über den ITO-Elektroden befindet sich eine ca 10nm dicke, gewischte Polymerschicht OL, die als Orientierungsschicht für die FlüssigkristallMoleküle wirkt. Die Moleküle der Polymerschicht sind nicht in einer Ebene isotrop parallel zu den Glassubstraten GS angeordnet, sondern weisen einen sogenannten Pretilt-Winkel ε auf. Dieser Winkel ist immer ausgerichtet in die Wischoder Reibrichtung, welche im linken Teil von Fig. 11 mit großen Doppelpfeilen 103, 104 gekennzeichnet ist. Die stabförmigen Flüssigkristallmoleküle richten sich parallel aus und haften an den Molekülen des Polymerfilms. Wegen dem Pretilt-Winkel **ε** an den Bindestellen des Polymers kann sich beispielsweise nur eine Helix im Uhrzeigersinn durch die Flüssigkeit ausbilden. Eine Helix im Gegenuhrzeigersinn ist dann nicht möglich.

Dieser Pretilt-Winkel ε beeinflusst auch die Ausrichtung der Helixachse und verkippt damit die optische Achse der doppelbrechenden Flüssigkeit um einen gewissen Winkel zur Deckglasnormalen (Substrat). Diese Verkippung der schraubenförmigen Molekülketten erzeugt eine Phasenverzögerung zwischen den beiden Polarisationsrichtungen, sodass die Polarisation am Ausgang der TN-Zelle einen elliptischen Anteil erhält und dadurch der Kontrast sinkt. Die Isokontrast-Kurven sind dann nicht mehr symmetrisch zur Flächennormalen der TN-Zelle. Zusätzlich hängt die Transmissionskennlinie in Funktion der angelegten Spannung wesentlich vom Einfallswinkel des Laserstrahls auf die TN-Zelle ab. Beim VA-Zellentyp ist eine solche Asymmetrie des Isokontrastplots in der Regel nicht vorhanden.

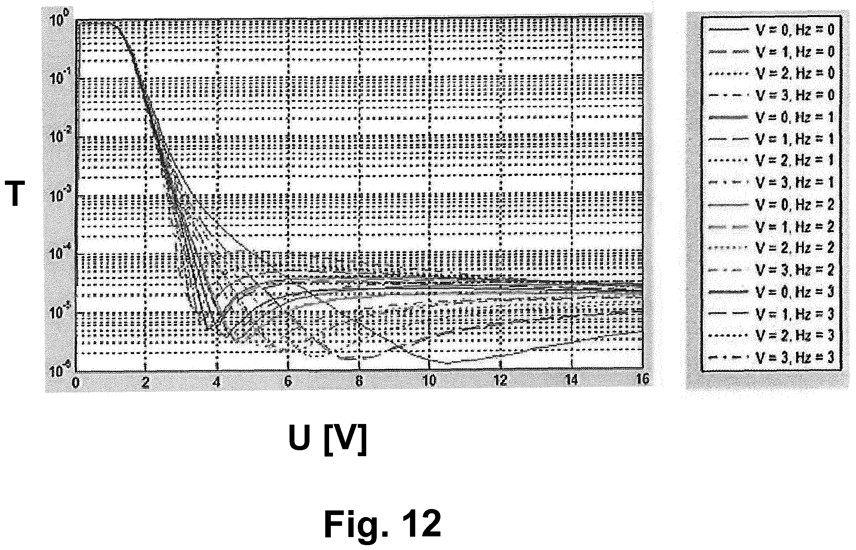

**Fig. 12** zeigt elektro-optische Kennlinien für verschiedene Laser-Einfallswinkel. Aufgetragen ist die Transmission T zwischen 1 und 10⁻⁶ als Funktion der an die TN-Zelle angelegten Steuerspannung U (in V) für Blickwinkel (azimutal, polar bzw. horizontal, vertikal) von (0°, 0°) bis (+3°, +3°).

Die Ausrichtung des TN-LC-Abschwächers zum Laserstrahl beeinflusst auch die Transmissionskennlinie als Funktion der angelegten Spannung.

Bei diesen Messungen wurde eine TN-Zelle genau senkrecht zur Laserachse (Z-Achse) ausgerichtet und matrixartig in beiden Richtungen, also in Hz- und V-Richtung, schrittweise von 0° bis +3° geneigt. Mit der Verkippung des LCD verändert sich die Intensitätskennlinie. Das lokale Minimum verschiebt sich dabei längs der Spannungsachse, und der Minimalwert der Transmission verändert sich ebenfalls.

Aus dieser Darstellung lassen sich als Schlussfolgerungen aus einer fehlerhaften Ausrichtung des TN-LCD zum Laserstrahl ableiten: Einerseits verändert sich der erreichbare Kontrast, anderseits verändert sich auch die Transmissions-Spannungs-Kennlinie.

Diese markante Abhängigkeit der LCD-Kennlinie zur Ausrichtung des TN-LCD ist ein wichtiger Aspekt, der beim Einbau eines TN-Flüssigkristall-Shutters in ein EDM-Modul berücksichtigt werden muss; insbesondere wird daraus die Notwendigkeit einer sorgfältigen Justierung der Zelle deutlich.

Aus obiger Grafik ist ersichtlich, dass mit TN-LC-Zellen maximale Abschwächungen von höher als 0D5 (10⁵) erreichbar sind. Dabei ist zu beachten, dass das Abschwächerelement in der korrekten Ausrichtung zum Laserstrahl in Hz- und V-Richtung gekippt in das EDM-Modul eingebaut wird.

Insbesondere für TN-LC-Zellen, mit denen ein hoher Kontrast erreicht wird, ergibt sich des Weiteren ein Streulichtproblem durch in die Flüssigkeit eingemischte Glasfasern, Kunststofffasern oder Glaskugeln zur Erfüllung einer Funktion als Abstandshalter zwischen den Glasplatten. Die Breite des Plattenabstands ist durch die Laserwellenlänge und die Doppelbrechung (Retardance) des Flüssigkristalls festgelegt (Gooch-Tarry-Kurve).

Erfindungsgemäß werden zur Verringerung der Streulichterzeugung dabei zylinderförmige Spacer mit einer möglichst kurzen Länge zwischen 3 µm und 10 µm eingesetzt. Alternativ werden auch Glaskügelchen verwendet; diese haben den Vorteil von viel kleineren Dimensionen und Flächenanteils als die zylinderförmigen Stäbchen, wodurch beim Durchgang eines Laserstrahls noch weniger Streulicht erzeugt wird. Zusätzlich wird darauf geachtet, dass die Brechungsindices von Spacern und Flüssigkristallen bei der Nutzwellenlänge möglichst gut übereinstimmen.

Die Verwendung von möglichst kleinen Spacern (kurze Fasern oder Glaskügelchen) ist kommerziell nicht gebräuchlich. Daher sind Standard-Flüssigkristallzellen, in denen übliche größere Spacer Verwendung finden, ungeeignet für Abschwächer mit hohem Kontrast, entsprechend den mit der vorliegenden Erfindung angestrebten optischen Qualitäten.

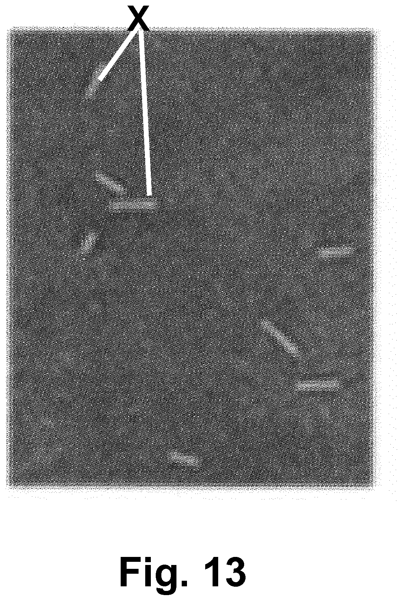

**Fig. 13** zeigt eine mikroskopische Aufnahme einer TN-LCD im Durchlicht, ohne Kombination der TN-LCD mit Polarisatoren.

In der Aufnahme sind weiße Stäbchen X als Spacer zu erkennen. Die Fasern haben eine große Dimension 3.9 µm x 27 µm und sind klar sichtbar, was dokumentiert, dass sie in erheblichem Ausmaß Licht streuen. Eine Zelle mit derart großen Spacern und zusätzlich auch noch solchen Spacern in einer derart großen Anzahl ist für ein erfindungsgemäßes Bauteil ungeeignet.

Eine andere und für die Erfindung geeignete Ausführungsform einer LC-Zelle mit wenig Streulicht und hohem Kontrast weist in der freien, optischen Öffnung keine Spacer auf, und die Spacer sind dabei ausschließlich im nicht optisch genutzten Außenbereich der Zelle platziert.

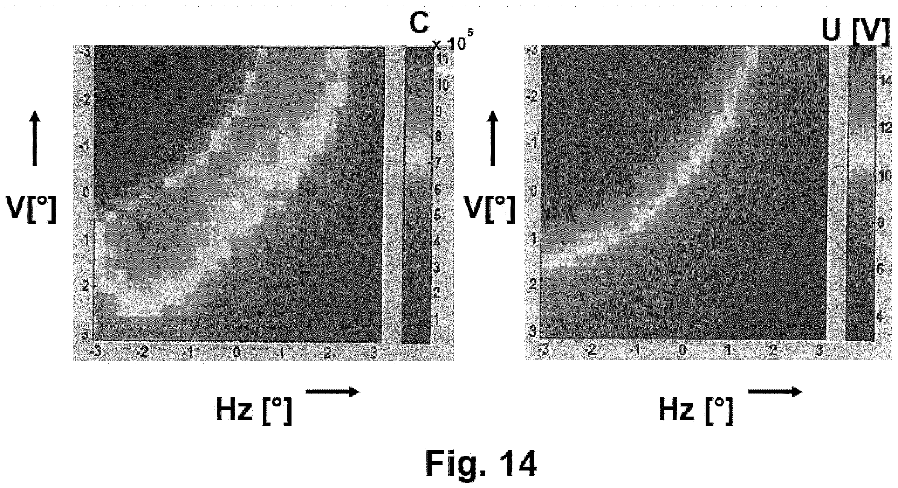

**Fig. 14** illustriert in weiteren Darstellungsformen das Kontrastverhalten einer erfindungsgemäßen TN-LC-Abschwächeinheit. Der linke Teil der Figur zeigt in einem sogenannten Isokontrastplot, in Art einer Höhenliniendarstellung, Messergebnisse für den Einfluss der Ausrichtung des TN-LC-Abschwächers zum Laserstrahl auf den Kontrast über den Winkelbereich (Hz,V) von (-3°,-3°) bis (+3°,+3°), dargestellt als horizontale bzw. vertikale Graphikachse, und den Werten des gemessenen Kontrasts (entsprechend Höhenlinien) im rechten Balkendiagramm.

Bei senkrechtem Lasereinfall auf die LC-Zelle sind bei geeignet genauer Ausrichtung der Polarisatoren sehr hohe Abschwächungs- bzw. Kontrastwerte bis 10⁵ erzielbar. Wird jedoch die Zelle zum Laserstrahl nur leicht verkippt, so verringert sich die Abschwächung deutlich. Ein solches Verhalten ist von Fernsehbildschirmen bekannt und wird im Fachjargon als "Light leakage at oblique incidence" bezeichnet.

Für jede Art von LC-Zellen, und insbesondere für TN-LC-Zellen, ist daher eine Berücksichtigung des Isokontrastplots und Einstellung des optimalen Winkels der Zelle zum Laserstrahl wichtig.

Größte Kontrastwerte sind folglich in einem Band des Winkelbereichs (Hz,V) von (-2.5°,+1.5°) bis (+1°,-2.5°) erreichbar.

Größte Kontrastwerte sollen aber nicht bereits bei zu niedrigen Ansteuerspannungen erreicht werden; ansonsten ist die Kennlinie zu steil und die Einstellgenauigkeit ungenau. Daher ist für eine Zelloptimierung auch noch eine andere Darstellung der Kontrastabhängigkeit wesentlich. Im rechten Teil von Fig. 14 ist, wiederum als Funktion des horizontalen und des vertikalen Winkels, dargestellt, bei welcher Spannung die maximalen Kontrastwerte erreicht wurden. - Aus dieser Darstellung ergibt sich, dass, bei einer Spannung von 10 V bis 14 V, für die Anwendung als elektro-optischer Abschwächer sich die Winkelbereiche (Hz,V) = (-3°,+1°) über (0°,0°) bis (+1°,-3°) am besten eignen.

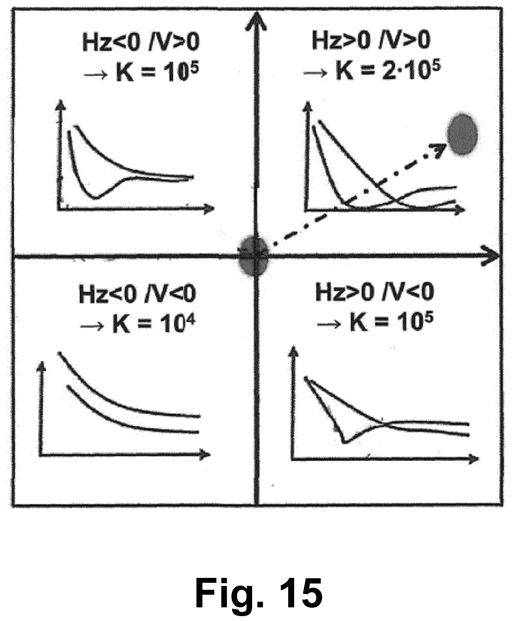

**Fig. 15** zeigt für eine TN-Zelle eine qualitative Darstellung des Einflusses des Kippwinkels zur Laserstrahlrichtung auf den Verlauf der Kennlinie, aufgeteilt nach den vier Winkelquadranten (Hz<0,V>0; Hz>0 V>0; Hz<0,V<0; Hz>0,V<0) des Lasereinfallswinkels. Diese Darstellung ist zu vergleichen mit Fig. 14, wobei zu beachten ist, dass hinsichtlich des "V"-Winkels die Darstellung gleichartig ist, hinsichtlich des "Hz"-Winkels aber an der "0°-Linie" gespiegelt ist.

Die Ellipse markiert als ein Kennzeichen für die Verkippung der LC-Zelle weg vom senkrechten Auftreffen des Laserstrahls auf die LC-Zelle den von der Verkippung der LC-Zelle abhängigen Laserrückreflex LR von der Zelle zurück in Richtung Laserquelle.

Steht Monotonie und ausreichende Steigungs- und WinkelToleranz der Kennlinie an erster Stelle, dann sind gemäß dieser Darstellung die besten Ausrichtungen der LC-Zelle mit hohem Kontrast in den Winkelquadranten oben links und unten rechts zu finden. Steht hingegen maximale Abschwächung und damit maximaler Kontrast der Kennlinie an erster Stelle, dann ist in dieser Figur der optimale Winkel im Winkelquadranten oben rechts am besten geeignet; denn in diesem sind in der Regel die höchsten Kontrastwerte lokalisiert.

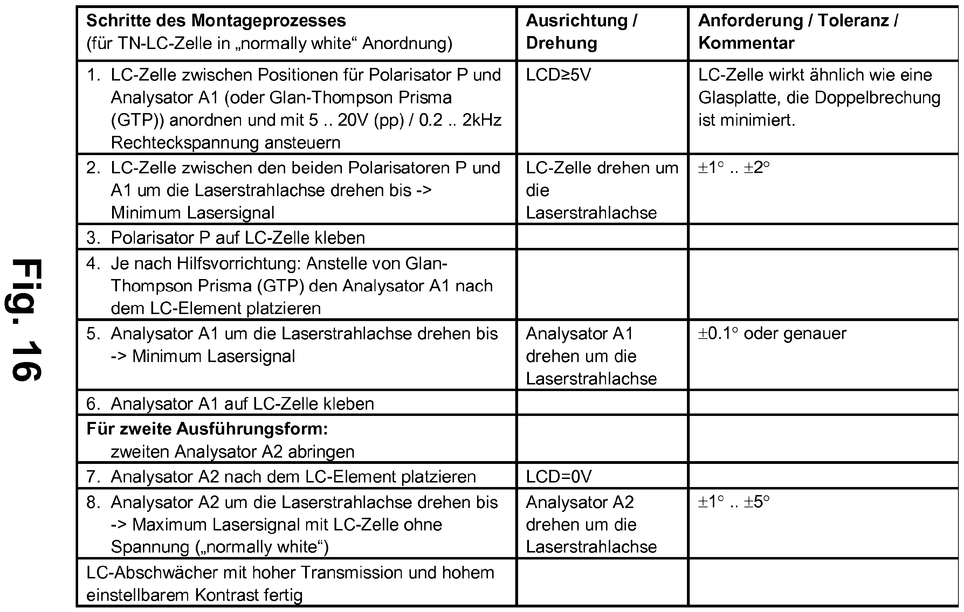

In **Fig. 16** ist in tabellarischer Form das erfindungsgemäße Verfahren zur Herstellung eines erfindungsgemäßen Flüssigkristall-Shutters vom Typ "twisted nematic" zusammengefasst. Dieses besondere Herstellungsverfahren wurde entwickelt, um einen erfindungsgemäßen LC-Abschwächer mit den geforderten hohen möglichen Kontrastwerten bis 10⁵ und höher produzieren zu können. Insbesondere wurde das erfindungsgemäße Verfahren zur Herstellung von TN-LC-Zellen erprobt und untersucht. Vorzugsweise werden die diversen Ausrichtungen während der Montage mit einer Hilfslaserquelle gemessen und überwacht.

Im ersten Schritt des Verfahrens wird die Flüssigkristallzelle zwischen die Positionen für den Polarisator P und den ersten Analysator A1 im Anregungsstrahlengang möglichst genau senkrecht oder unter einem anderen genau definierten polaren Einfallswinkel zur optischen Achse des eingestrahlten Laserstrahls 101 angeordnet (siehe auch Fig. 3). Dabei wird typischerweise an der Position des Analysators A1 zunächst als Hilfsmittel ein Glan-Thompson-Prisma (GTP) eingesetzt. Die LCD wirkt dann wie eine Glasplatte. Die LCD wird beispielsweise mit 16V(pp)/ 0.2..2kHz Rechteckspannung angesteuert. Dadurch bleibt die Polarisation durch die Zelle weitgehend unbeeinflusst.

Die optisch wirksamen Achsen von Polarisator, Analysator und Hilfsanalysator (GTP) sollten nach Malus Law gegenseitig auf 0.1° genau oder besser ausgerichtet sein (siehe Schritt 4). Entsprechend wird im Schritt 2 gefordert, dass die Winkelausrichtung um die Laserachse der LC-Zelle bezogen auf die Polarisatoren auf +/- 1.5...2° stimmt. Andernfalls wirkt eine TN-Zelle auch als optische Phasenplatte, was den Kontrast vermindert. Bei einer Verdrehung um +/-2° ist die maximale Abschwächung um 20% geringer, bei einer Verdrehung um +/- 5...6° um 100% schlechter.

Im Schritt 3 wird dann der Polarisator P auf die im Strahlengang zugewandte Seite der ersten Glassubstratplatte geklebt oder optisch gekittet. Dabei wird die Verklebung bevorzugt, insbesondere unter Benutzung einer auf einer Seite eines als Polarisationsblatt ausgebildeten Polarisators P bereits vorhandenen Klebefolie.

Im Schritt 4 wird anstelle des anfänglich eingesetzten Glan-Thompson Prismas im Strahlengang der erste Analysator A1 platziert.

Im Schritt 5 wird dann der Anylsator A1, zur Änderung seiner Polarisationsausrichtung, um die optische Achse des eingestrahlten Laserstrahls gedreht, bis das Detektorsignal einen Minimalwert erreicht. Dann, d.h. bei gekreuzter Ausrichtung der linearen Polarisationen von Polarisator P und Analysator A1, wird mittels an die TN-LC-Zelle angelegter Spannung maximale Abschwächung erreicht.

Vorzugsweise wird dann, in einem Schritt 6, der insbesondere als ein Polarisationsblatt, im Speziellen mit einer einseitigen Klebefolie, ausgebildete Analysator A1 auf die Rückseite der zweiten Glassubstratplatte, in Richtung des Lichtaustritts aus dem LC-Flüssigkristall-Shutter, aufgeklebt.

Ein einzelner LC-Abschwächer, bestehend aus Polarisator, TN-LCD und einem Analysator, kann eine zu geringe Abschwächung aufweisen, mit einem maximal erreichbaren Kontrast von beispielsweise nur 80000 statt größer als 100000, auf. Daher ist eine zweite Ausführungsform mit einem zweiten Analysator in serieller Anordnung vorteilhaft, d.h. im Strahlengang hinter dem ersten Analysator wird ein zweiter Analysator eingesetzt.

In den optionalen weiteren Schritten für eine zweite Ausführungsgorm des erfindungsgemäßen Herstellungsverfahrens wird dazu, bei ausgeschalteter Spannung, im Schritt 7, ein zweiter Analysator A2 angeordnet.

Im abschließenden Schritt 8 wird dann der Analysator A2 um die optische Achse des Laserstrahls gedreht, bis das Signal des durch den Laserstrahl hindurchtretenden Lichts, bei weiterhin ausgeschalteter Spannung an der LCD, gedreht, bis das Signal des durchtretenden Lichts ein Maximum erreicht. - Bei diesem zweiten Rotationsschritt ist eine Genauigkeit von ± 1° ... ± 5° erwünscht. Diese Justierung ist weniger kritisch, da der zweite Analysator im Wesentlichen lediglich dafür vorgesehen ist, um Fehler in der Positionierung des Analysators A1 zu kompensieren, um tatsächlich wirklich anforderungsgemäß einen möglichen Kontrast von größer als 10⁵ erreichen zu können.

Mit den vorangehenden Herstellungsschriten ist eine erfindungsgemäße LC-Abschwächeinheit, insbesondere eine TN-LC-Zelle in "normally white" Anordnung, fertiggestellt.

Gemäß einer besonderen Ausführungsform des erfindungsgemäßen Herstellungsverfahren beruht dieses also auf den folgenden (strukturellen) Merkmalen:
Der hier beschriebene LC-Abschwächer besteht aus:
- einem aufgeklebten Polarisationsblatt P, einseitig selbstklebend und einseitig mit einer Antireflexionsschicht beschichtet;
- einem LCD-Shutter L;
- einem ersten aufgeklebter Analysatorblatt A1, einseitig selbstklebend und nicht mit einer Antireflexionsschicht beschichtet;
- optional zusätzlich einem zweiten aufgeklebten Analysatorblatt A2, einseitig selbstklebend und einseitig mit einer Antireflexionsschicht beschichtet, wobei die beiden Analysatoren A1 und A2 beide am Ausgang des optischen Strahls (im optischen Weg der LC-Zelle nachfolgend) angeordnet sind.

Beim Aufbau dieser TN-LC-Zellen wurde absichtlich auf doppelbrechende Kompensationsfilme verzichtet, um die Transmission im Offenzustand möglichst hoch zu halten. Dielektrische Anisotropie insbesondere der LC-Flüssigkeit begrenzt zwar den hohen Abschwächfaktor auf eine bestimmte Einfallsrichtung, und aus der Display-Technik sind sowohl uniaxiale als auch biaxiale Phasenverzögerungsfilme kombiniert mit positiver und negativer Doppelbrechung als Polarisationskompensatoren bekannt, welche den Winkelbereich erweitern. Gebräuchlich sind beispielsweise A-Filme mit einer in-plane optischen Achse und/oder C-Filme mit einer zur Filmebene senkrecht ausgerichteten optischen Achse. Der Winkelbereich mit höchster Abschwächung kann dadurch symmetrisiert und erweitert werden. Mit einer Erweiterung der Isokontrast-Diagramme lockern sich auch die Einbautoleranzen des Abschwächelements. Nachteilig ist aber die erheblich reduzierte maximale Transmission und die Komplexität des Bauteils. Die maximale Transmission des TN-LC-Elements im Offenzustand würde mit den erwähnten Kompensationsfolien unter 60% sinken und wäre dadurch weniger gut geeignet als ein erfindungsgemäßer Abschwächer für ein Distanzmessmodul eines geodätischen Messgeräts.

Anstelle von auf Kunststoff basierenden Polarisationsfolien (absorbierend, reflektierend, nanowires, usw.) können auch anderweitige, dem Fachmann bekannte Polarisatortypen verwendet werden, wie polarisierende Prismen, Brewsterplatten, oder dielektrisch beschichtete Teiler.

Die vorangehenden Figuren waren auf die Illustration von Abschwächeinheiten mit - wenn auch nicht zwangsläufig ausschließlich - linear polarisiert in den Flüssigkristall eintretendem Eingangslicht ausgerichtet. Eine alternative Ausführungsform zu den oben beschriebenen TN-LC-Zellen ist die Bestückung des LC-Elements mit zirkulären statt mit linearen Polarisatoren. Die zirkulären Polarisatoren bestehen typischerweise im Wesentlichen aus einer Kombination eines linearen Polarisators mit einer λ/4-Phasenplatte.

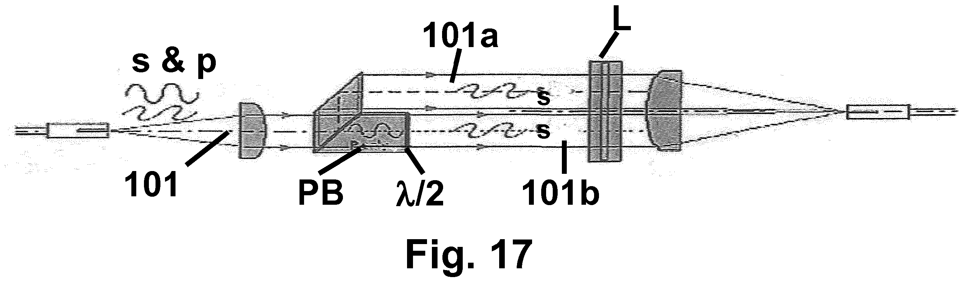

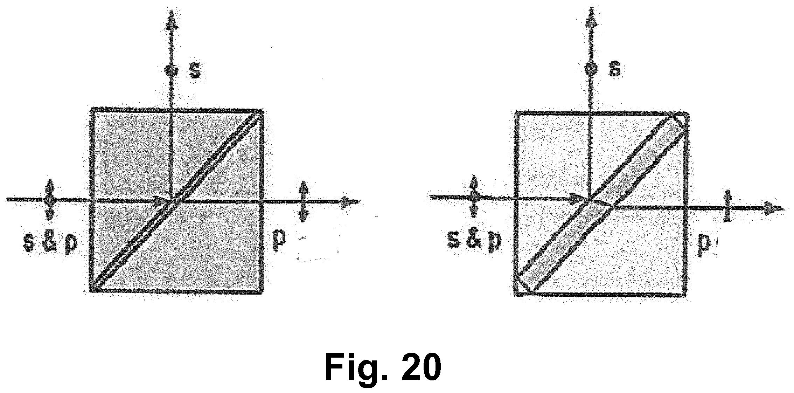

**Fig. 17** zeigt eine Ausführungsform einer Abschwächeinheit, die eine polarisationsfreie Wirkung aufweist und dadurch auch empfängerseitig eingesetzt werden kann. Das über eine Glasfaser geleitete Empfangslicht wird durch eine Linse parallelisiert. Das Empfangslicht 101 ist ein Gemisch aus s-polarisierter und p-polarisierter Strahlung. Das gemischt polarisierte Licht trifft auf einen polarisationsselektiven Strahlteiler PB, ausgebildet als ein Dünnfilm-Würfel-Polarisator, der das einfallende Licht in zwei zueinander senkrecht polarisierte Anteile (s und p) als Teilstrahlen 101a und 101b in senkrecht zueinander stehenden Ebenen aufteilt. - Mögliche Ausführungsformen des polarisationsselektiven Strahlteilers PB sind in **Fig. 20** gezeigt. - Nachfolgend ist im Strahlengang eine λ/2-Platte angeordnet, so dass die Polarisation des nachfolgenden Teilstrahls 101a derjenigen des anderen Teilstrahls 101b entspricht. Zur Abschwächungs- bzw. Kontrastregulierung ist daher ein einziger Flüssigkristall-Shutter L, der sich über die Strahlquerschnitte beider Teilstrahlen erstreckt, ausreichend.

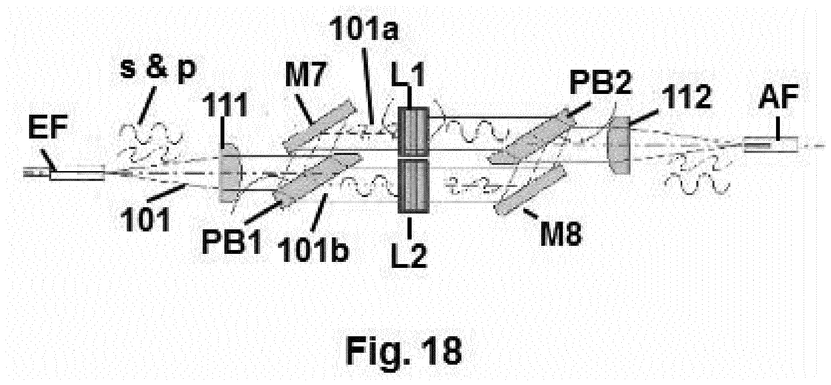

**Fig. 18** zeigt eine weitere Ausführungsform einer Abschwächeinheit für ein Gemisch aus s-polarisiertem und p-polarisiertem und im dargestellten Fall über eine zuführende Glasfaser (Empfangsfaser EF) bereitgestelltem Empfangslicht. Das Empfangslicht 101 wird mittels einer Linse 111 parallelisiert und trifft dann unter einem schrägen Winkel auf einen ersten Polarisationsteiler PB1, d.h. auf eine unter dem Bresterwinkel zur Empfangsstrahlung montierte Glasplatte PB1. Dort wird das Licht entsprechend den beiden Polarisationsrichtungen s und p anteilig transmittiert bzw. auf einen etwa im selben Winkel wie der Polarisationsteiler PB1 zur Richtung des parallelen, von der Linse 111 kommenden Empfangslichts 101 montierten einfachen Spiegel M7 reflektiert. Das vom Spiegel M7 dann weiter reflektierte Licht gelangt als Teilstrahl 101a weiter zu einem Flüssigkristall-Shutter L1, und das vom Polarisationsteiler PB1 transmittierte Licht gelangt als Teilstrahl 101b zu einem zweiten Flüssigkristall-Shutter L2, der unter 90° verdreht zum ersten Flüssigkristall-Shutter L1 im Strahlengang angeordnet ist.

Das Licht wird also entsprechend den beiden Polarisationsrichtungen aufgeteilt und dann von den beiden Flüssigkristall-Shuttern L1, L2 separat voneinander in einer einstellbaren Weise abgeschwächt. Im Strahlengang dann weiter folgend ist eine weitere Kombination aus einer unter dem Bresterwinkel zur Lichtausbreitung montierte und als zweiter Polarisationsteiler wirkende Glasplatte PB2 und einem weiteren, etwa parallel zum Polarisationsteiler PB2 montierten Spiegel M8. Mittels dieser zweiten Kombination, aus Polarisationsteiler PB2 und Spiegel M8, werden die beiden zuvor voneinander separierten und getrennt voneinander abgeschwächten Teilstrahlen wieder zu einem gemeinsamen Strahlenbündel zusammengeführt, das über eine Linse 112 auf die Empfangsöffnung einer weiteren Glasfaser AF zwecks Weiterführung des Lichts zu einem Photodetektor, beispielsweise einer Photodiode, gelenkt wird.

Die dem auftreffenden Licht zugewandten Empfangsflächen der Strahlteiler PB1, PB2 sind vorzugsweise jeweils als polarisierende Spiegelflächen ausgeführt.

Die hier beschriebene verlustarme LC-Abschwächeinheit (Lichtverlust typischerweise 20 %) weist also die folgenden kennzeichnenden Merkmale auf:
- Die polarisierenden Komponenten sind jeweils unter einem schrägen Winkel, d.h. von ungleich 90° zur Lichtausbreitungsrichtung, montiert.
- Die Anordnung wirkt für beide Polarisationsrichtungen und ist daher auch zum Einsatz im Empfangskanal geeignet, weil das rückreflektierte Licht vom Zielobjekt nicht mehr zu 100 % polarisiert ist. (Der Polarisationsgrad beträgt zwischen 50 % und 100 %).
- In diesem Beispiel dargestellt ist eine Anordnung der Abschwächeinheit zwischen zwei Lichtfasern (Eingangsfaser EF und Ausgangsfaser AF); die Abschwächeinheit ist aber auch und ohne Linsen in einer Lichtfreistrahl-Anordnung einsetzbar.

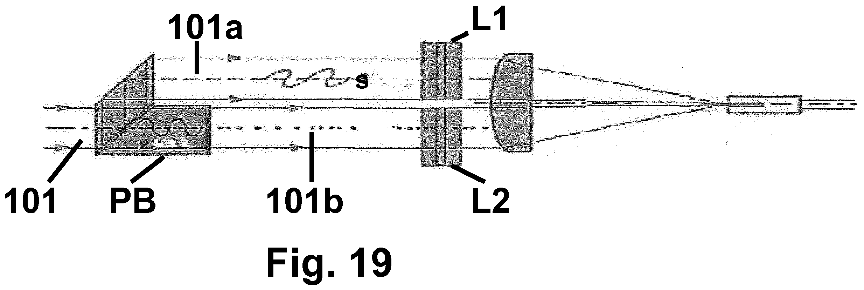

**Fig. 19** zeigt eine zu Fig. 17 alternative Ausführungsform einer Abschwächeinheit, welche sich von derjenigen von Fig. 17 dadurch unterscheidet, dass im Strahlengang dem Dünnfilm-Würfel-Polarisator als polarisationsselektivem Strahlteiler PB keine λ/2-Platte nachgeordnet ist, sondern zwei diskrete Flüssigkristall-Shutter L1 und L2, denen folglich Licht unterschiedlicher Polarisation in den beiden Teilstrahlen 101a und 101b zugeführt wird. Bezüglich dieser Ausführungsform, ebenso wie für die Ausführungsform der vorangehenden Fig. 18, ist wichtig, dass die Lichtwege nach dem Dünnfilm-Würfel-Polarisator gleiche optische Längen und damit gleiche Laufzeiten aufweisen.

Eine ähnliche Abschwächeinheit wie in Fig. 19 ist auch in einem elektronischen Distanzmessmodul (EDM), mit Flüssigkristall-Shutter sowohl in einem optischen Sendekanal als auch in einem optischen Empfangskanal, sowie mit TN-Flüssigkristallzellen und linear polarisiertem Empfangslicht, verwendbar. Beispielsweise handelt es sich dabei um eine Ausführungsform umfassend eine senderseitige Abschwächeinheit (wie in Fig. 3) und zwei empfangsseitige Abschwächeinheiten mit polarisationsselektivem Verhalten (wie in Fig. 19). Alle drei Elemente sind gemäß dieses Beispiels als LC-Elemente mit TN-Struktur ausgeführt. Den beiden LC-Zellen im Empfangskanal ist dabei wiederum ein polarisationssensitiver Strahlteiler vorgeschaltet, sodass dem jeweiligen LC-Element die passende Polarisation zugeführt wird.

Analog kann gemäß eines anderen Ausführungsbeispiels eines erfindungsgemäßen EDM eine Abschwächerkombination in einer Anordnung ähnlich zu derjenigen von Fig. 18 eingesetzt werden, gemäß dieses Beispiels umfassend ein senderseitiges Abschwächelement nach Fig. 3 und ein einziges empfangsseitiges Abschwächelement mit polarisationsselektivem Verhalten wie in Fig. 17. Beide Elemente sind als LC-Elemente mit TN-Struktur ausgeführt. Dem LC-Element im Empfangskanal ist wiederum ein polarisationssensitiver Teiler vorgeschaltet, wobei dem einen Ausgangskanal des Teilers eine λ/2-Platte folgt, damit die Polarisation dem ersten Ausgang entspricht. Dadurch ist im nachfolgenden Strahlengang wiederum ein einziges LC-Element mit doppelter Fläche ausreichend. Anstelle von LC-Elementen basierend auf der TN-Topologie können auch LC-Zellen funktionierend nach dem VA- oder FFS-Prinzip verwendet werden.

**Fig. 20** zeigt als Beispiele für polarisationsselektive Strahlteiler PB zum Aufsplitten einer unpolarisierten Empfangsstrahlung einen Würfel und einen Dünnfilm-Polarisator auf einer Glasplatte, mit jeweils unter 45° zur Richtung des einfallenden Lichts angeordneter aktiver Strahlteilerfläche. Dabei sind die Strahlteiler PB so angeordnet, dass p-polarisertes Licht jeweils - bezogen auf die Bildebene - der Richtung des einfallenden Lichts im Wesentlichen unabgelenkt hindurchgelassen wird, während s-polarisiertes Licht unter einem Winkel von 90° dazu abgelenkt wird.

Wie in Figur 18 dargestellt, kann aber der Winkel der Strahlteilung auch verschieden von 90 Grad sein. Übernimmt der polarisierende Strahlteiler gleichzeitig die Funktion des eintrittsseitigen Polarisators der LC-Zelle, dann muss das Auslösch- oder Teilungsverhältnis ausreichend groß sein, nämlich größer als 10⁵ . Polarisierende Teiler mit derart hohem Teilungsverhältnis sind bekannt; Beispiele sind das Doppel Glan-Taylor Prisma, das Glan-Thompson Prisma oder Dünnschichtpolarisatoren nahe am Brewsterwinkel.

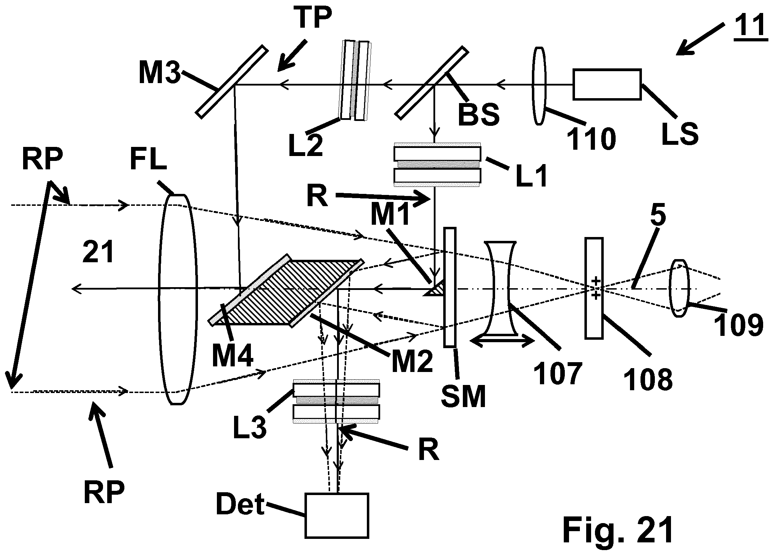

**Fig. 21** zeigt ein Schema eines erfindungsgemäßen möglichen prinzipiellen optischen Aufbaus für einen Theodoliten 11. Das Emissionslicht einer Lichtquelle LS, typischerweise ausgebildet als ein Laser oder eine Laserdiode, wird durch eine Linse 110 kollimiert und auf einen Strahlteiler BS gelenkt, von wo ein Teil des Lichts als Referenzlicht R bis zu einem 45°-Umlenkspiegel M1, der auf der optischen Achse 5 eines Beobachtungsfernrohrs des Theodoliten angeordnet ist, umgelenkt wird. Auf dem dazwischen befindlichen Lichtweg ist gemäß des dargestellten Beispiels eine erste erfindungsgemäße optische Abschwächeinheit L1 angeordnet. Dann wird das Referenzlichtlicht R entlang der optischen Achse 5 weiter bis zu einem Spiegel M2 gelenkt, von wo es dann weiter, nach Passieren einer weiteren erfindungsgemäßen optischen Abschwächeinheit L3, auf einen optischen Detektor Det gelangt.

Der andere Teil des vom Strahlteiler BS aufgeteilten Lichts gelangt entlang des Sendekanals TP (Transmissionslichtpfads) zu einem Umlenkspiegel M3, von wo es auf einen weiteren 45°-Umlenkspiegel M4 gelangt, der ebenfalls auf der optischen Achse 5 angeordnet ist und das auftreffende Licht als Messlicht 21 in Richtung eines zu beobachtenden bzw. anzuzielenden Objekts lenkt.

Vom Objekt kommendes Empfangslicht wird entlang des Empfangskanals RP mit einer Objektiv- oder Fokussierlinse FL gesammelt und auf eine, als spektral selektiver Spiegel wirkende, beschichtete Substratplatte SM (z. B. beschichtete Glasplatte) fokussiert, die mit einer für IR-Licht oder NIR-Licht reflektierenden, aber ansonsten, d.h. zumindest im sichtbaren Spektralbereich, optisch transparenten Schicht versehen ist. Das von der Substratplatte SM reflektierte Licht wird ebenfalls über den Spiegel M2 weiter umgelenkt, von wo es, nach Passieren der Abschwächeinheit L3, auf den Detektor Det gelangt. Das übrige Empfangslicht, ohne den ausgespiegelten IR- und/oder NIR-Lichtanteil, schreitet weiter, ohne wesentliche Veränderung durch die Substratplatte SM, im Beobachtungsstrahlengang des Fernrohrs fort bis zu einem entlang der optischen Achse 5 beweglichen Fokussierglied 107. Der Strahlengang umfasst, nachfolgend weiter auf der optischen Achse 5 angeordnet, eine Strichplatte 108 in der Bildebene des Fokussierglieds 107 und schließlich am Ende ein Okular 109 für einen Beobachter.

Als Variante könnte der Sendekanal mit einem TN-LC-Element ausgestattet sein und der Empfangskanal mit einem polarisations-insensitivem Scattering Mode LC-Element (Smart Glasses) bestückt sein.

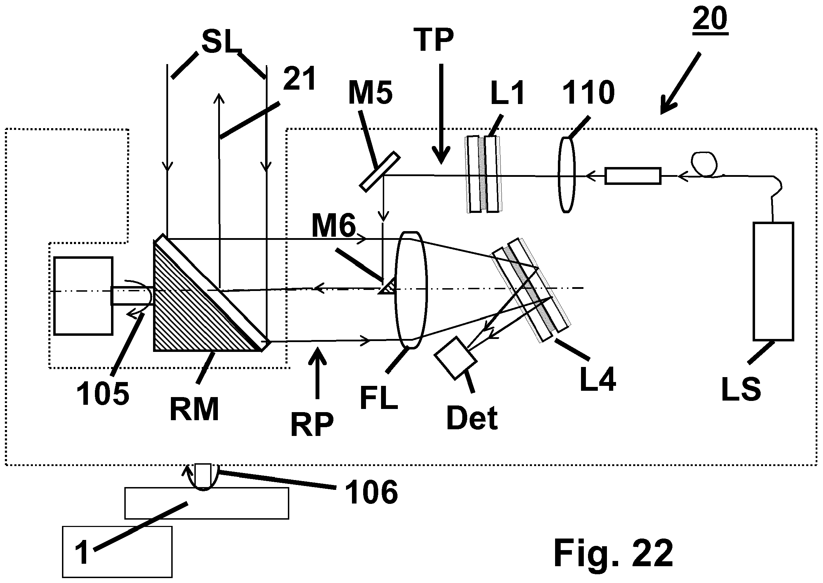

**Fig. 22** zeigt eine erfindungsgemäße Abwandlung zu der vorangehend in Fig. 2 dargestellten Ausführungsform eines möglichen prinzipiellen optischen Aufbaus eines Scanners.

Das Emissionslicht einer Lichtquelle LS, typischerweise eines Lasers, wird auf dem Transmissionslichtpfad TP (Sendekanal) zunächst durch eine Linse 110 kollimiert und zu einer ersten erfindungsgemäßen variablen optischen Abschwächeinheit L1 geführt, wo die Intensität bedarfsgemäß eingestellt wird. Das Licht gelangt dann zu einem Umlenkspiegel M5, von dem es zu einem weiteren Umlenkspiegel M6 geleitet wird. Von dort gelangt das Licht zu einem rotierenden Spiegel RM umgelenkt wird, auf dessen Oberfläche es unter einem Winkel von 45° zum Einfallslot auftrifft, so dass es dort rechtwinklig zu seiner Richtung vor dem rotierenden Spiegel RM als Messlicht 21 in Richtung eines zu scannenden Objekts umgelenkt wird. Der Rotationsspiegel RM ist typischerweise um 360° rotierbar, wie durch den Pfeil 105 angedeutet. Am Objekt gestreutes oder reflektiertes sowie vom Objekt ausgehendes sonstiges Licht gelangt gemeinsam als Scan-Licht SL im Messlichtpfad RP zurück zu dem rotierenden Spiegel RM und wird von dort zu einer Fokussierlinse FL gelenkt. Gemäß dieser dargestellten Ausführungsform ist der Umlenkspiegel M6 in der Mitte der Fokussierlinse FL, auf deren optischer Achse angebracht, beispielsweise aufgeklebt. Fokussierlinse FL und Umlenkspiegel M6 könnten aber auch separat voneinander angeordnet ein. Wichtig ist dabei lediglich, dass in dem Empfangslichtkanal RP ein nur möglichst geringer Anteil des Lichts durch den Umlenkspiegel M6 abgeschattet wird. Das Licht wird von der Fokussierlinse FL gebündelt, so dass es auf eine Empfangsoberfläche einer weiteren erfindungsgemäßen optischen Abschwächeinheit L4 auftrifft, die, im Gegensatz zu den vorangehend gezeigten Ausführungsformen erfindungsgemäßer variabler optischer Abschwächeinheiten nicht in Transmission, sondern in Reflexion, beispielsweise mittels eines rückseitig angebrachten Spiegels, arbeitet. Das von der Abschwächeinheit L4 nach Bedarf abgeschwächte und reflektierte Licht wird dann auf einen Detektor Det gelenkt.

Die dargestellten Lichtwege TP und RP können zumindest teilweise durch lichtübertragende optische Fasern realisiert sein.

Der, durch eine punktierte Linie eingefasst angedeutete, obere Teil des Scanners 20 ist auf einer Basis 1 montiert, gegenüber der dieser obere Teil horizontal drehbar ist, wie durch den Pfeil 106 angedeutet.

Die in den vorangehenden Beispielen als "Spiegel" oder "Umlenkspiegel" bezeichneten optischen Elemente können selbstverständlich auch durch andersartige optische Reflexions- oder Umlenkelemente, beispielsweise durch Prismen, realisiert sein.

## Patentansprüche

1. Vermessungsgerät, ausgebildet als Tachymeter, Laserscanner, Profiler oder Lasertracker, mit einem elektronischen Laserdistanzmessmodul, das einen optischen Sendekanal und einen optischen Empfangskanal für Lasermessstrahlung umfasst, wobei im optischen Sendekanal und/oder optischen Empfangskanal eine variable optische Abschwächeinheit (100) für die Lasermessstrahlung vorgesehen ist,
**dadurch gekennzeichnet, dass**
die Abschwächeinheit (100) derart aufgebaut und ausgebildet ist, dass eine Abschwächung von auf die Abschwächeinheit (100) auftreffender Lasermessstrahlung (101) mittels Flüssigkristallen (LC) erfolgt, und dafür mindestens aufweist:
• einen ersten Polarisator (P),
• einen Flüssigkristall-Shutter (L, L1, 12) mit einer einstellbaren variablen Transmission (T), und
• einen zweiten Polarisator, nachfolgend erster Analysator (A1) genannt,)
wobei die Flüssigkristalle (LC) mit Spacer-Elementen (SP) gemischt sind,
• welche als Fasern ausgebildet sind und eine Länge von 3 µm bis 15 µm aufweisen oder als Glaskugeln ausgeführt sind und einen Durchmesser von 3 µm bis 10 µm aufweisen,
oder
• wobei die Flüssigkristalle in einem Lichtdurchtrittsbereich zu einer optisch genutzten Öffnung des Flüssigkristall-Shutters (L, L1, l2) keine Mischung mit Spacer-Elementen (SP) aufweisen und die Spacer-Elemente (SP) nur in einem Randbereich, außerhalb des Lichtdurchtrittsbereichs zu der optisch genutzten Öffnung des Flüssigkristall-Shutters (L, L1, l2) in die Flüssigkristalle (LC) eingemischt sind.

2. Vermessungsgerät nach Anspruch 1,
**dadurch gekennzeichnet, dass**
der Flüssigkristall-Shutter (L, L1, l2)
• eine Twisted Nematic Flüssigkristallzelle TN-LCD umfasst, oder
• eine Vertically Aligned Nematic Flüssigkristallzelle VA-LCD umfasst, oder
• eine Fringe Field Switching Flüssigkristallzelle FFS-LCD umfasst.

3. Vermessungsgerät nach Anspruch 1 oder 2,
**dadurch gekennzeichnet, dass**
• ein dritter Polarisator, nachfolgend zweiter Analysator (A2) genannt, vorgesehen ist, und dass
• der erste Analysator (A1) und der zweite Analysator (A2) "am Ausgang des optischen Strahls" angeordnet sind.

4. Vermessungsgerät nach einem der Ansprüche 1 bis 3, **dadurch gekennzeichnet, dass**
der erste Polarisator (P) und der erste Analysator(A1), und falls vorgesehen der zweite Analysator (A2), als
• lineare Polarisatoren oder als zirkulare Polarisatoren ausgebildet sind, oder
• Weitwinkelpolarisatoren, und/oder
• auf Kunststoff basierende Polarisationsfolien - absorbierend, reflektierend, nanowires -, polarisierende Prismen, insbesondere Doppel-Glan-Taylor Prismen, Glan-Thompson-Prismen, Brewsterplatten / Dünnschichtpolarisatoren nahe am Brewsterwinkel, oder dielektrisch beschichtete Teiler ausgebildet sind.

5. Vermessungsgerät nach einem der Ansprüche 1 bis 4, **dadurch gekennzeichnet, dass**
die Flüssigkristalle (LC) eine auf eine Lichtwellenlänge von 650 nm, 800 nm oder 1550 nm optimierte Chromasie aufweisen.

6. Vermessungsgerät nach einem der Ansprüche 1 bis 5, **dadurch gekennzeichnet, dass**
• die Abschwächeinheit (100) in dem optischen Sendekanal angeordnet ist und
• in dem optischen Empfangskanal ein polarisator- und/ oder analysatorfreier Flüssigkristall-Shutter (L, L1, l2) mit einer einstellbaren, variablen Transmission angeordnet ist.

7. Vermessungsgerät nach einem der Ansprüche 1 bis 5, **dadurch gekennzeichnet, dass**
• die Abschwächeinheit (100) in dem optischen Sendekanal angeordnet ist und
• in dem optischen Empfangskanal ein polarisationsselektiver Strahlteiler (PB, PB1, PB2) zur REINVERSION polarisationsselektiven Aufspaltung des Empfangslichts (101) in zwei Teilstrahlen (101a, 101b) unterschiedlicher Polarisation (s, p) angeordnet ist, in deren optischen Wegen jeweils ein Flüssigkristall-Shutter (L1, L2) angeordnet ist, insbesondere wobei die Teilstrahlen (101a, 101b) auf gleiche optische Weglängen und gleiche Lichtlaufzeiten eingestellt sind.

8. Vermessungsgerät nach einem der Ansprüche 1 bis 5, **dadurch gekennzeichnet, dass**
• die Abschwächeinheit (100) in dem optischen Sendekanal angeordnet ist und
• in dem optischen Empfangskanal ein polarisationsselektiver Strahlteiler (PB) zur polarisationsselektiven Aufspaltung des Empfangslichts (101) in zwei Teilstrahlen (101a, 101b) unterschiedlicher Polarisation (s, p) angeordnet ist, wobei beide Teilstrahlen (101a, 101b) gemeinsam zu einem Flüssigkristall-Shutter (L, L1, l2) geführt werden, wobei in einem der beiden Teilstrahlen (101a, 101b) eine λ/2-Platte im optischen Weg dem Flüssigkristall-Shutter (L, L1, l2) vorangehend angeordnet ist.

## Claims

1. Surveying apparatus, in particular tachymeter, laser scanner, profiler or laser tracker, comprising an electronic laser distance measuring module, which comprises an optical transmission channel and an optical reception channel for laser measurement radiation, wherein a variable optical attenuation unit (100) for the laser measurement radiation is provided in the optical transmission channel and/or optical reception channel,
**characterized in that**
the attenuation unit (100) is constructed and designed in such a way that laser measurement radiation (101) impinging on the attenuation unit (100) is attenuated by means of liquid crystals (LC), and for this purpose at least comprises:
• a first polarizer (P),
• a liquid crystal shutter (L, L1, L2) having a settable variable transmission (T), and
• a second polarizer, hereinafter termed first analyzer (A1),
wherein the liquid crystals (LC) are mixed with spacer elements (SP),
• which are designed as fibers and have a length of 3 µm to 15 µm or as glass beads and have a diameter of 3 µm to 10 µm,
or
• wherein the liquid crystals are not mixed with spacer elements (SP) in a light passage region to an optically used opening of the liquid crystal shutter (L, L1, L2) and the spacer elements (SP) are mixed into the liquid crystals (LC) only in an edge region, outside the light passage region to the optically used opening of the liquid crystal shutter (L, L1, l2).

2. Surveying apparatus according to Claim 1,
**characterized in that**
the liquid crystal shutter (L, L1, L2) comprises
• a twisted nematic liquid crystal cell TN-LCD, or
• a vertically aligned nematic liquid crystal cell VA-LCD, or
• a fringe field switching liquid crystal cell FFS-LCD.

3. Surveying apparatus according to Claim 1 or 2, **characterized in that**
• a third polarizer, hereinafter termed second analyzer (A2), is provided, and **in that**
• the first analyzer (A1) and the second analyzer (A2) are arranged "at the output of the optical beam".

4. Surveying apparatus according to any one of Claims 1 to 3, **characterized in that**
the first polarizer (P) and the first analyzer (A1), and if provided the second analyzer (A2), are designed as
• linear polarizers or as circular polarizers, or
• wide-angle polarizers, and/or
• plastic-based polarization films - absorbent, reflective, nanowires -, polarizing prisms, in particular double Glan-Taylor prisms, Glan-Thompson prisms, Brewster plates / thin-film polarizers near the Brewster angle, or dielectrically coated splitters.

5. Surveying apparatus according to any one of Claims 1 to 4, **characterized in that**
the liquid crystals (LC) have a chromatism optimized to a light wavelength of 650 nm, 800 nm or 1550 nm.

6. Surveying apparatus according to any one of Claims 1 to 5, **characterized in that**
• the attenuation unit (100) is arranged in the optical transmission channel and
• in the optical reception channel is arranged a polarizer- and/or analyzer-free liquid crystal shutter (L, L1, L2) having a settable, variable transmission.

7. Surveying apparatus according to any one of Claims 1 to 5, **characterized in that**
• the attenuation unit (100) is arranged in the optical transmission channel and
• in the optical reception channel is arranged a polarization-selective beam splitter (PB, PB1, PB2) for the polarization-selective splitting of the reception light (101) into two partial beams (101a, 101b) having different polarizations (s, p), a respective liquid crystal shutter (L1, L2) being arranged in the optical paths of said partial beams, in particular wherein the partial beams (101a, 101b) are set to identical optical path lengths and identical light propagation times.

8. Surveying apparatus according to any one of Claims 1 to 5, **characterized in that**
• the attenuation unit (100) is arranged in the optical transmission channel and
• in the optical reception channel is arranged a polarization-selective beam splitter (PB) for the polarization-selective splitting of the reception light (101) into two partial beams (101a, 101b) having different polarizations (s, p), wherein both partial beams (101a, 101b) are passed jointly to a liquid crystal shutter (L, L1, 12), wherein in one of the two partial beams (101a, 101b) a λ/2 plate is arranged upstream of the liquid crystal shutter (L, L1, L2) in the optical path.

## Revendications

1. Appareil de mesure, conçu sous la forme d'un tachéomètre, d'un laser de poursuite, d'un profileur ou d'un laser de relevé, doté d'un module électronique de télémétrie laser comprenant un canal optique d'émission et un canal optique de réception de faisceau de mesure laser, une unité d'atténuation (100) optique variable de faisceau de mesure laser étant prévue dans le canal optique d'émission et/ou le canal optique de réception,
**caractérisé en ce que**
l'unité d'atténuation (100) est construite et conçue de façon à produire, au moyen de cristaux liquides (LC), une atténuation du faisceau de mesure laser (101) incident sur ladite unité d'atténuation (100), et présente à cet effet au moins :
• un premier polariseur (P),
• un obturateur à cristaux liquides (L, L1, 12) avec une transmission (T) variable réglable, et
• un deuxième polariseur, dénommé ci-après premier analyseur (A1),
les cristaux liquides (LC) étant mélangés à des éléments d'espacement (SP),
• qui sont conçus comme des fibres et présentent une longueur allant de 3 µm à 15 µm ou qui sont réalisés sous forme de billes de verre et présentent un diamètre allant de 3 µm à 10 µm,
ou
• les cristaux liquides présents dans une zone traversée par la lumière dirigée vers une ouverture optiquement utile de l'obturateur à cristaux liquides (L, L1, 12) n'étant pas mélangés à des éléments d'espacement (SP), et les éléments d'espacement (SP) étant mélangés aux cristaux liquides (LC) uniquement dans une zone périphérique, en dehors de la zone traversée par la lumière dirigée vers une ouverture optiquement utile de l'obturateur à cristaux liquides (L, L1, 12).

2. Appareil de mesure selon la revendication 1,
**caractérisé en ce que**
l'obturateur à cristaux liquides (L, L1, 12) comprend
• une cellule à cristaux liquides à effet *twisted nematic* [TN-LCD], ou
• une cellule à cristaux liquides en phase nématique à alignement vertical [VA-LCD], ou
• une cellule à cristaux liquides de type FFS (*fringe field switching*) [FFS-LCD].

3. Appareil de mesure selon la revendication 1 ou 2,
**caractérisé en ce que**
• il est prévu un troisième polariseur, dénommé ci-après deuxième analyseur (A2), et **en ce que**
• le premier analyseur (A1) et le deuxième analyseur (A2) sont disposés « à la sortie du rayon optique ».

4. Appareil de mesure selon l'une des revendications 1 à 3,
**caractérisé en ce que**
le premier polariseur (P), le premier analyseur (A1), et l'éventuel deuxième analyseur (A2), sont conçus sous la forme :
• de polariseurs linéaires ou de polariseurs circulaires, ou
• de polariseurs grand angle et/ou
• de films polarisants à base de matériau synthétique - absorbant, réfléchissant, nanofils -, de prismes polarisants, notamment de doubles prismes de Glan-Taylor, de prismes de Glan-Thompson, de lames de Brewster / polariseurs en couche mince proches de l'angle de Brewster, ou de pièces à revêtement diélectrique.

5. Appareil de mesure selon l'une des revendications 1 à 4,
**caractérisé en ce que**
les cristaux liquides (LC) présentent une aberration chromatique optimisée pour une longueur d'onde lumineuse de 650 nm, 800 nm ou 1550 nm.

6. Appareil de mesure selon l'une des revendications 1 à 5,
**caractérisé en ce que**
• l'unité d'atténuation (100) est disposée dans le canal optique d'émission et
• un obturateur à cristaux liquides (L, L1, 12) avec une transmission variable réglable et sans polariseur et/ou sans analyseur est disposé dans le canal optique de réception.

7. Appareil de mesure selon l'une des revendications 1 à 5,
**caractérisé en ce que**
• l'unité d'atténuation (100) est disposée dans le canal optique d'émission et
• un séparateur de faisceau sélectif à la polarisation (PB, PB1, PB2) est disposé dans le canal optique de réception afin de séparer la lumière incidente (101) de manière sélective à la polarisation, en deux faisceaux partiels (101a, 101b) de polarisation distincte (s, p), un obturateur à cristaux liquides (L1, L2) étant disposé sur le chemin optique de chacun desdits faisceaux partiels, lesdits faisceaux partiels (101a, 101b) parcourant notamment des chemins optiques de même longueur pendant la même durée.

8. Appareil de mesure selon l'une des revendications 1 à 5,
**caractérisé en ce que**
• l'unité d'atténuation (100) est disposée dans le canal optique d'émission et
• un séparateur de faisceau sélectif à la polarisation (PB) est disposé dans le canal optique de réception afin de séparer la lumière incidente (101) de manière sélective à la polarisation, en deux faisceaux partiels (101a, 101b) de polarisation distincte (s, p), lesdits deux faisceaux partiels (101a, 101b) étant dirigés ensemble vers un obturateur à cristaux liquides (L, L1, 12), une lame λ/2 étant disposée sur le chemin optique de l'un desdits deux faisceaux partiels (101a, 101b) en amont de l'obturateur à cristaux liquides (L, L1, 12).
